# EUROPEAN PATENT APPLICATION

(11) **EP 4 650 923 A1**
(43) Date of publication of application: **19.11.2025**
(21) Application number: 24830410.7
(22) Date of filing: 03.06.2024
(51) Int. Cl.: G06F 3/0481, G06F 3/04817

(54) **DISPLAY METHOD AND ELECTRONIC DEVICE**

(30) Priority: 30.06.2023 CN 202310802970
(71) Applicant: Huawei Technologies Co., Ltd., Shenzhen, Guangdong 518129 (CN)
(72) Inventor: YE, Rongtang, Shenzhen, Guangdong 518129 (CN); LIANG, Huaiguo, Shenzhen, Guangdong 518129 (CN); YANG, Jianye, Shenzhen, Guangdong 518129 (CN)
(74) Representative: MERH-IP Matias Erny Reichl Hoffmann Patentanwälte PartG mbB
(86) International application number: PCT/CN2024/097096
(87) International publication number: WO 2025/001763

(57) **Abstract**

This application provides a display method and an electronic device. The method is applied to the electronic device. The method includes: receiving a first operation when displaying a first animation, where the first operation indicates to display a second animation, the first animation is a window animation of a first window, and the second animation is a view animation in a first application; in response to the first operation, sending configuration data of the first animation to a second service by using a first service, determining configuration data of the second animation based on the first operation by using the first application, and transferring the configuration data of the second animation to the second service by using the first application; and applying the configuration data of the first animation and the configuration data of the second animation to the first window by using the second service. The solution provided in this application can implement parallel execution of a window animation and an in-application animation, so as to improve animation display efficiency and display effect.

## Description

### CROSS-REFERENCE TO RELATED APPLICATIONS

This application claims priority to Chinese Patent Application No. 202310802970.2, filed with the China National Intellectual Property Administration on June 30, 2023 and entitled "DISPLAY METHOD AND ELECTRONIC DEVICE", which is incorporated herein by reference in its entirety.

### TECHNICAL FIELD

This application relates to the field of electronic device technologies, and in particular, to a display method and an electronic device.

### BACKGROUND

Currently, an animation related to a window displayed by an electronic device may be usually implemented via control by a system service or an application of the electronic device. Because processes of implementing the animation via control by the system service and the application are independent of each other, a window animation controlled by the system service may conflict with an animation (which is an in-application view animation) controlled by the application, resulting in low animation display efficiency and poor display effect.

### SUMMARY

This application provides a display method and an electronic device, to implement parallel execution of a window animation and an in-application animation, so as to improve animation display efficiency and display effect.

According to a first aspect, this application provides a display method, applied to an electronic device. The method includes: receiving a first operation when displaying a first animation, where the first operation indicates to display a second animation, the first animation is a window animation of a first window, and the second animation is a view animation in a first application; in response to the first operation, sending configuration data of the first animation to a second service by using a first service, determining configuration data of the second animation based on the first operation by using the first application, and transferring the configuration data of the second animation to the second service by using the first application; and applying the configuration data of the first animation and the configuration data of the second animation to the first window by using the second service. The electronic device includes the first service, the first application, and the second service.

In the method, the first animation is a window animation, and the second animation is an in-application animation. When the electronic device receives, in a process of executing and displaying the first animation, an indication for executing the second animation, the electronic device may transfer the configuration data of the first animation to the second service by using the first service, and transfer the configuration data of the second animation to the second service by using the first application. In this way, the second service can obtain both the configuration data of the first animation and the configuration data of the second animation, and apply both the configuration data of the first animation and the configuration data of the second animation to the first window, so that the first animation and the second animation are executed in parallel, and animation display efficiency and display effect can be improved.

In a possible design, applying the configuration data of the first animation and the configuration data of the second animation to the first window by using the second service includes: applying, by using the second service, the configuration data of the first animation and the configuration data of the second animation to a layer corresponding to the first window, composing an animation interface based on an obtained layer, and sending the animation interface for display.

In the method, the configuration data of the first animation and the configuration data of the second animation are applied to the same layer, and then the animation interface is composed based on the layer and sent for display, so that the first animation and the second animation can be displayed in parallel during animation display, so as to complete parallel animation execution.

In a possible design, transferring the configuration data of the second animation to the second service by using the first application includes: sending the configuration data of the second animation to a buffer queue by using the first application; and obtaining the configuration data of the second animation from the buffer queue by using the second service.

In the method, as a shared memory, the buffer queue has a feature of efficient access, and can implement fast and accurate data processing (for example, data transfer). Therefore, a data transmission speed is relatively high when animation configuration data of the first application is transferred to the second service by using the buffer queue. This helps improve efficiency of an animation execution process.

In a possible design, the first service is a window manager service WMS, and the second service is a graphics framework service SF.

In a possible design, both the configuration data of the first animation and the configuration data of the second animation are identified as configuration data corresponding to the first window.

In the method, both the configuration data of the first animation and the configuration data of the second animation are identified as the configuration data corresponding to the first window. This helps an application and a service in the electronic device identify an application object of the configuration data, thereby improving processing efficiency.

In a possible design, configuration data of any animation indicates an attribute feature of a layer or window that carries the animation, and the attribute feature includes at least one of the following: a position, a size, a rotation angle, a radius, and a transparency.

In a possible design, the method further includes: in response to a received second operation, controlling, by using a second application, to display a second window, where the second operation indicates to display the second window; in response to a received third operation, determining configuration data of a drag and follow animation based on the third operation by using the second application, where the third operation indicates to execute the drag and follow animation on the second window; sending the configuration data of the drag and follow animation to a shared memory by using the second application; obtaining the configuration data of the drag and follow animation from the shared memory by using the second service; and applying the configuration data of the drag and follow animation to the second window by using the second service. The electronic device further includes the second application and the shared memory.

In the method, the first application may directly write configuration data of an animation into the shared memory, and the second service may obtain the configuration data of the animation from the shared memory, compose an animation interface based on the configuration data, and send the animation interface for display. In a configuration data transfer process, time consumed for inter-process communication can be reduced, thereby reducing lagging and improving drag and follow performance of the drag and follow animation. In addition, the method can avoid an operation such as applying configuration data in a thread on an application side, thereby reducing performance overheads on the application side and reducing application lagging.

In a possible design, the shared memory is the buffer queue.

In the method, the buffer queue is used as the shared memory, so that a feature of efficient access of the buffer queue can be fully used, to implement fast and accurate data processing (for example, data transfer), thereby improving efficiency of a drag and follow animation execution process.

According to a second aspect, this application provides a display method, applied to an electronic device. The method includes: in response to a received first operation, controlling, by using a first application, to display a first window, where the first operation indicates to display the first window; in response to a received second operation, determining configuration data of a drag and follow animation based on the second operation by using the first application, where the second operation indicates to perform the drag and follow animation on the first window; sending the configuration data of the drag and follow animation to a shared memory by using the first application; obtaining the configuration data of the drag and follow animation from the shared memory by using a first service; and applying the configuration data of the drag and follow animation to the first window by using the first service.

In a possible design, the shared memory is the buffer queue.

In a possible design, the first service is a graphics framework service SF.

According to a third aspect, an embodiment of this application provides an electronic device. The electronic device includes a display, a memory, and one or more processors. The memory is configured to store computer program code, and the computer program code includes computer instructions. When the computer instructions are executed by the one or more processors, the electronic device is enabled to perform the method according to any one of the first aspect or the possible designs of the first aspect.

According to a fourth aspect, this application provides a computer-readable storage medium. The computer-readable storage medium stores a computer program. When the computer program is run on an electronic device, the electronic device is enabled to perform the method according to any one of the first aspect or the possible designs of the first aspect.

According to a fifth aspect, this application provides a computer program product. The computer program product includes a computer program or instructions. When the computer program or the instructions are run on an electronic device, the electronic device is enabled to perform the method according to any one of the first aspect or the possible designs of the first aspect.

According to a sixth aspect, this application provides a chip system. The chip system includes a processor and a memory, the memory stores instructions, and when the instructions are executed by the processor, the method according to any one of the first aspect or the possible designs of the first aspect is implemented. The chip system may include a chip, or may include a chip and another discrete component.

For beneficial effects of the second aspect to the sixth aspect, refer to the descriptions of the beneficial effects of the related content in the first aspect. Details are not described herein again.

### BRIEF DESCRIPTION OF DRAWINGS

FIG. 1 is a schematic flowchart of a window animation execution method;
FIG. 2(a) to FIG. 2(d) are a diagram of a window animation interface;
FIG. 3(a) to FIG. 3(d) are a diagram of a window animation interface;
FIG. 4(a) to FIG. 4(e) are a diagram of a window animation interface;
FIG. 5 is a schematic flowchart of a drag and follow animation execution method;
FIG. 6 is a diagram of a hardware architecture of an electronic device according to an embodiment of this application;
FIG. 7 is a diagram of a software architecture of an electronic device according to an embodiment of this application;
FIG. 8 is a diagram of an architecture of a control system according to an embodiment of this application;
FIG. 9a is a diagram of a display method according to an embodiment of this application;
FIG. 9b is a diagram of an animation execution method according to an embodiment of this application;
FIG. 10(a) to FIG. 10(d) are a diagram of an animation interface according to an embodiment of this application;
FIG. 11 is a diagram of a display method according to an embodiment of this application;
FIG. 12(a) and FIG. 12(b) are a diagram of an animation interface according to an embodiment of this application;
FIG. 13 is a diagram of a display method according to an embodiment of this application; and
FIG. 14 is a diagram of a structure of an electronic device according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The terms "first" and "second" below in the descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, concepts related to this application are described for reference by using examples.

An electronic device may be a device that supports a virtual audio device and has a communication function. In some embodiments of this application, the electronic device may be a portable device, for example, a mobile phone, a tablet computer, a wearable device (for example, a watch or a band) with a wireless communication function, an in-vehicle terminal device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a smart home device (for example, a smart television or a smart speaker), a smart robot, a workshop device, a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, a smart robot, an uncrewed aerial vehicle, or an aircraft).

The virtual audio device is a logic device that is obtained by virtualizing at least one independent electronic device by using a virtualization technology, and may be used by an application, a service, or a process in the electronic device. The wearable device is a portable device that can be directly worn by a user or integrated into clothes or an accessory of the user.

In some embodiments of this application, the electronic device may alternatively be a portable terminal device that further includes another function, for example, a personal digital assistant function and/or a music player function. An example embodiment of the portable terminal device includes but is not limited to a portable terminal device using Android^{®} or another operating system. Alternatively, the portable terminal device may be another portable terminal device, for example, a laptop computer (laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

It should be understood that, in embodiments of this application, "at least one" refers to one or more, and "a plurality of" refers to two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" generally indicates an "or" relationship between associated objects. "At least one of the following items (pieces)" or a similar expression thereof refers to any combination of these items, including a single item (piece) or any combination of a plurality of items (pieces). For example, at least one of a, b, or c may represent a, b, c, a and b, a and c, b and c, or a, b, and c, where a, b, and c may be singular or plural.

Currently, some window-related animations in an electronic device are executed in series, that is, only after execution of an animation is completed, another animation is executed. Therefore, in a process in which the electronic device executes an animation (that is, a current animation), when receiving an indication for executing another animation (that is, a new animation), the electronic device can execute only one of the two animations, and cannot execute the two animations in parallel. That is, the electronic device can only continue to execute the current animation and does not execute the new animation, or the electronic device can only interrupt the current animation and execute the new animation.

The foregoing problem is caused by the following reason: An animation related to a window displayed on the electronic device may be usually completed through control by a window manager service (window manager service, WMS) or an application in the electronic device, animation control processes of the window manager service and the application are independent of each other, and an animation carried on a window manager service side and an animation carried on an application side are not aware of each other. Therefore, when a window animation controlled by the window manager service side for execution conflicts with an animation controlled by the application side for execution (that is, the animations need to be displayed simultaneously), the electronic device can select only one of the animations for execution.

The following describes the foregoing problem in detail with reference to a specific example.

For example, when a user performs a slide-up operation to enable the electronic device to exit an application window (or referred to as an application interface), an animation of exiting the application window is a window animation controlled by the window manager service of the electronic device for implementation. When the user slides a desktop to flip a desktop page displayed on the electronic device, an animation of flipping the desktop page is an animation controlled by an application such as a desktop launcher (launcher) in the electronic device for implementation. Exiting the application window is closing the application window.

For ease of description, in embodiments of this application, the window animation controlled by the window manager service of the electronic device for implementation may be referred to as a system-level animation for short, and the animation (which may also be referred to as a view animation or the like, and belong to an in-application animation) controlled by the application in the electronic device for implementation may be referred to as an application-level animation for short. In embodiments of this application, it may be considered that applications are not distinguished for system-level animations. In other words, for different applications, system-level animations are displayed in a same manner. For example, all animations of exiting windows of different applications may be the following animation: The windows of the applications are gradually reduced to disappear, and a desktop gradually appears in this process. It may be considered that applications are distinguished for application-level animations. In other words, for different applications, application-level animations may be displayed in different manners. For example, window jump manners in different applications may be different. In embodiments of this application, it may alternatively be considered that a system-level animation (that is, a window animation) is an animation implemented by performing an operation on a window, and it may be considered that an application-level animation (that is, an in-application animation) is an animation implemented by performing an operation on a layer or a view.

For example, after the electronic device displays an application window of an application, when the user performs a slide-up operation, the electronic device may display, in response to the operation under control of the window manager service, an animation of exiting the application window. If the user slides the desktop in a process in which the electronic device displays the animation of exiting the application window, the animation of exiting the application window conflicts with an animation of flipping a desktop page, display of the animation of exiting the application window is interrupted or canceled, and the animation of flipping the desktop page is preferentially displayed. A priority of the application-level animation is higher than a priority of the system-level animation.

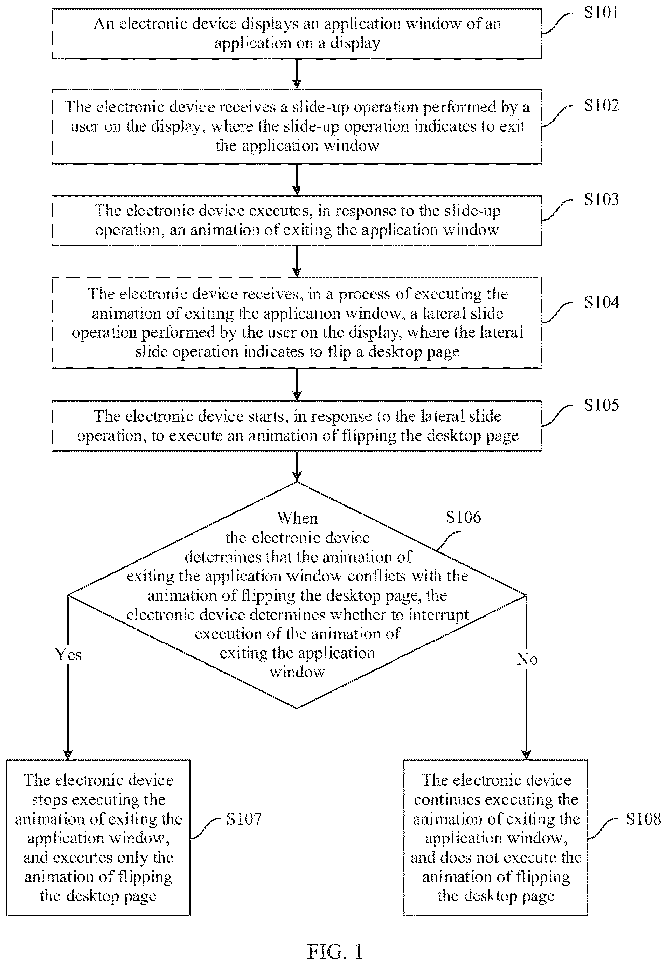

Refer to FIG. 1. A procedure corresponding to the foregoing process may include the following steps.

S101: An electronic device displays an application window of an application on a display.

S102: The electronic device receives a slide-up operation performed by a user on the display, where the slide-up operation indicates to exit the application window.

S103: The electronic device executes, in response to the slide-up operation, an animation of exiting the application window.

This process may be completed by a window manager service, a desktop launcher, a view framework (view system), and a graphics (SurfaceFlinger, SF) service in the electronic device. After the electronic device receives the slide-up operation, the window manager service in the electronic device may create a layer used to carry an animation, and transfer the layer to the desktop launcher. The desktop launcher may determine, based on the slide-up operation, configuration data of the animation of exiting the application window, and transparently transmit the layer and the configuration data to the SF through the view framework. In this transfer process, time is consumed for inter-process (binder) communication. The SF may apply the configuration data to the layer to compose an animation window and send the animation window for display.

In embodiments of this application, the SurfaceFlinger may also be referred to as a graphics framework, a graphics renderer, or the like. A name of the SurfaceFlinger is not limited in embodiments of this application.

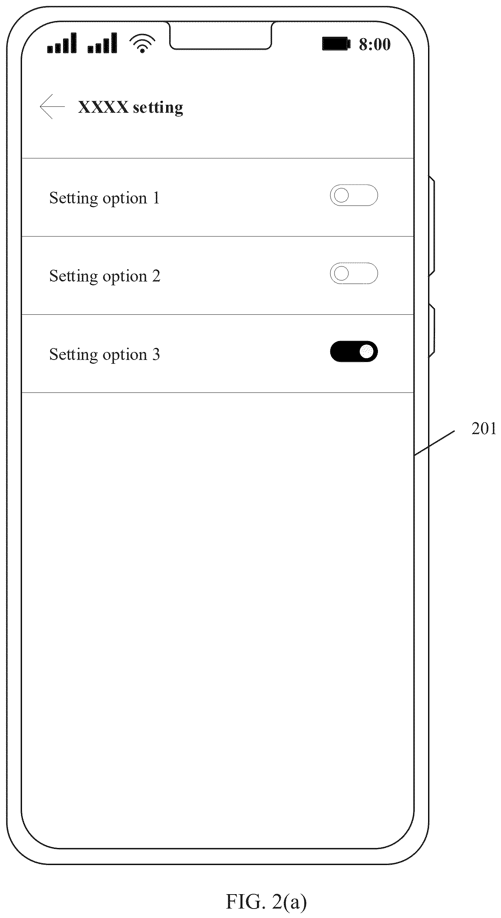

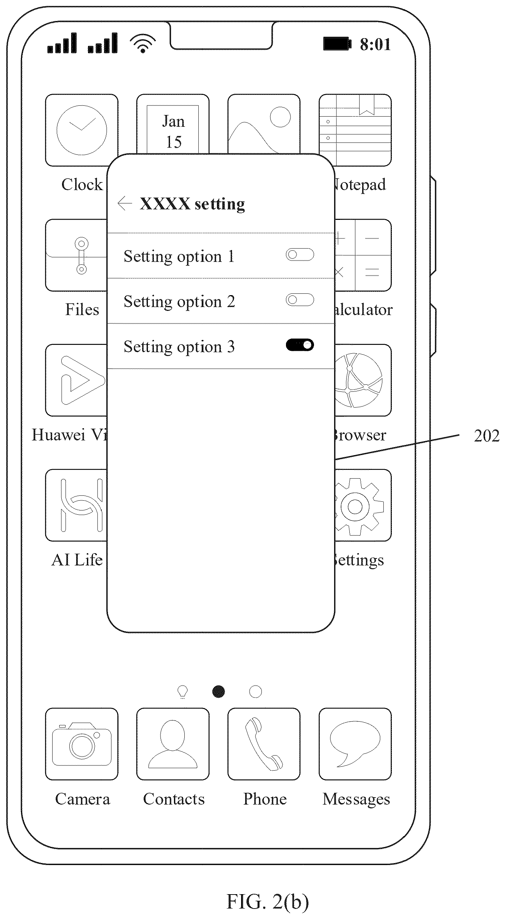

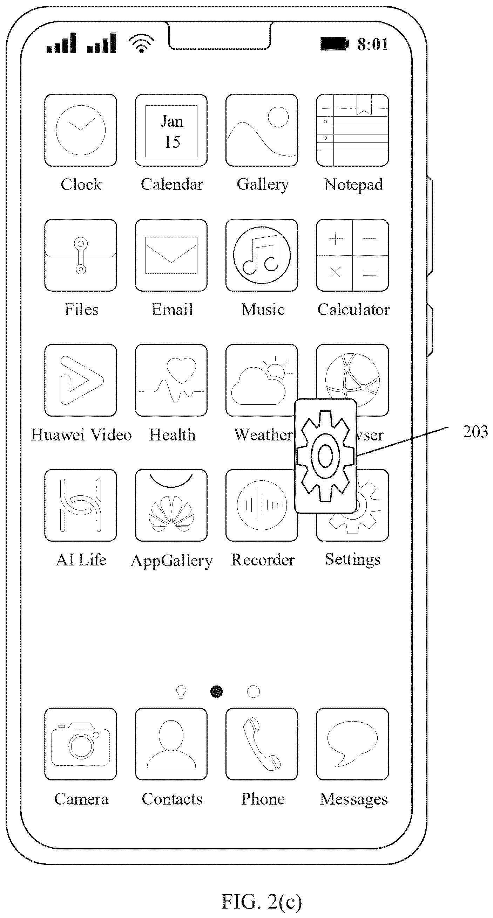

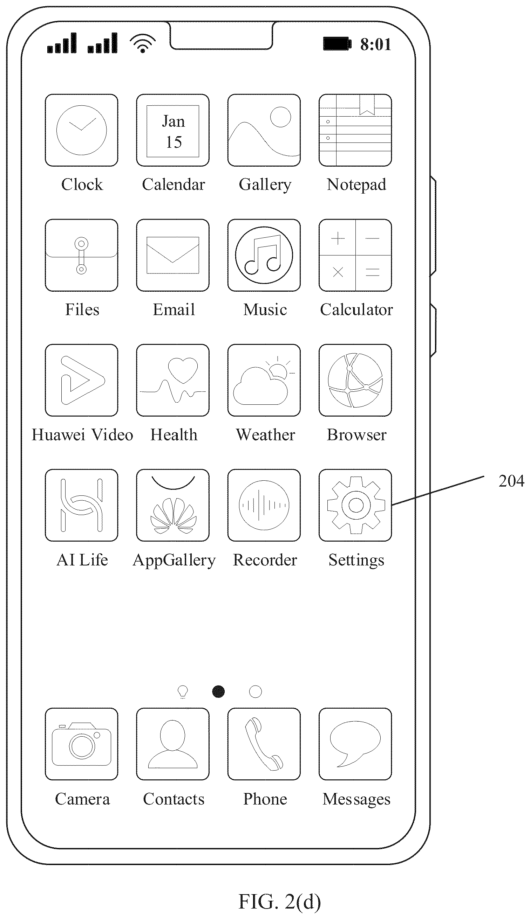

Example 1: An example in which the application window displayed by the electronic device in step S101 is a setting window is used. The animation of exiting the application window may be: The setting window is gradually reduced to disappear. In this process, a desktop including a setting icon is gradually displayed on the display. For example, an interface displayed by the electronic device when the animation of exiting the application window starts to be executed may be an interface shown in the diagram FIG. 2(a). In this case, the setting window is a setting window 201 shown in the diagram FIG. 2(a). In this scenario, the animation of exiting the application window is an animation of exiting the setting window 201. After the animation of exiting the application window starts to be executed, the setting window (that is, the setting window 201 shown in the diagram FIG. 2(a)) is gradually reduced, for example, may change to a setting window 202 shown in a diagram FIG. 2(b). The setting window 202 is a window obtained after the setting window 201 is reduced to a specific extent. In a process of continuing to execute the animation of exiting the application window, the setting window (which is the setting window 202 shown in the diagram FIG. 2(b) in this case) continues to be reduced, for example, may change to a setting window 203 shown in a diagram FIG. 2(c). The setting window 203 is a window obtained after the setting window 202 is reduced and window content is adjusted. In a process of continuing to execute the animation of exiting the application window, the setting window (which is the setting window 203 shown in the diagram FIG. 2(c) in this case) continues to be reduced, and may disappear when being reduced to a specific size (which may also be understood as dimensions), for example, may disappear when being reduced to having a same size as the setting icon. After the setting window disappears, an interface displayed by the electronic device changes to an interface shown in a diagram FIG. 2(d). The interface does not include the setting window, but includes a setting icon 204. In this case, execution of the animation of exiting the application window ends. The foregoing process in which the setting window 201 shown in the diagram FIG. 2(a) gradually disappears and the setting icon 204 shown in the diagram FIG. 2(d) gradually appears is a process of displaying the animation of exiting the application window. In a process in which the setting window gradually disappears, content in the window may be changed or may not be changed. For example, in a process of changing from the setting window 201 shown in the diagram FIG. 2(a) to the window 202 shown in the diagram FIG. 2(b), content in the window is not changed. In a process of changing from the setting window 202 shown in the diagram FIG. 2(b) to the window 203 shown in the diagram FIG. 2(c), content in the window is changed to the setting icon.

S104: The electronic device receives, in a process of executing the animation of exiting the application window, a lateral slide operation performed by the user on the display, where the lateral slide operation indicates to flip a desktop page.

S105: The electronic device starts, in response to the lateral slide operation, to execute an animation of flipping the desktop page.

The animation of flipping the desktop page is a view animation, and an application may change an attribute of each frame of view in the view animation to implement the animation of flipping the desktop page. A process in which the electronic device performs the animation of flipping the desktop page may be completed by the desktop launcher, the view framework, and the SF in the electronic device. Specifically, the desktop launcher may be configured to create and manage a layer for carrying the view animation, update view attribute (that is, an attribute of the layer) data such as layout data based on the lateral slide operation, and trigger the view framework to refresh the view attribute, to obtain configuration information of the animation of flipping the desktop page. After refreshing the view attribute, the view framework may transfer the layer content and the configuration information to the SF. Based on the layer content and the configuration information, the SF may compose an interface of the animation of flipping the desktop page, and send the interface for display. The layer content may be transferred by using a buffer queue (BufferQueue, BQ), and the configuration information may be transferred in a manner of inter-process communication.

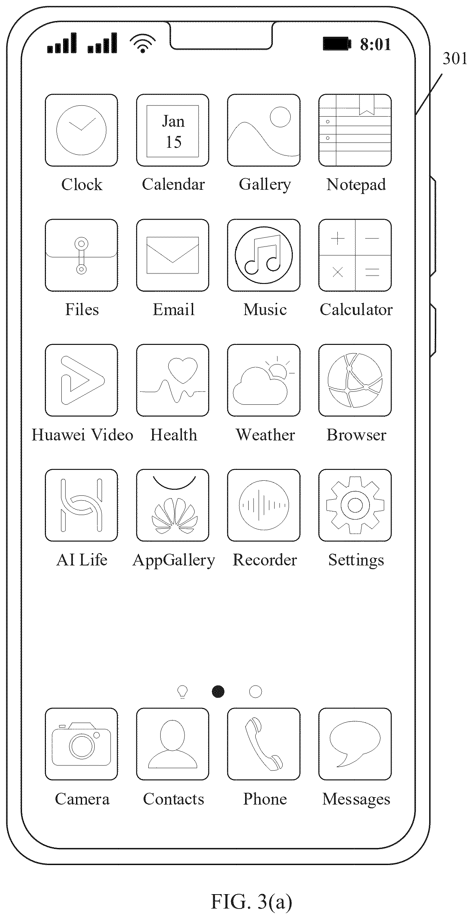

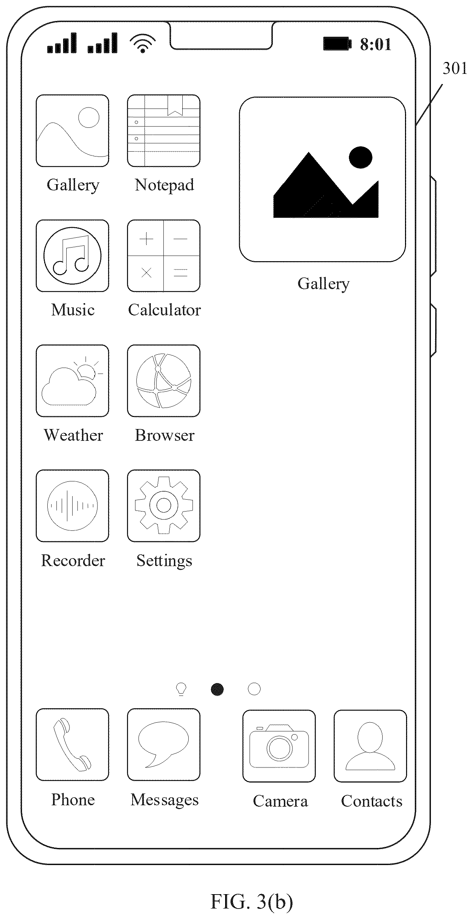

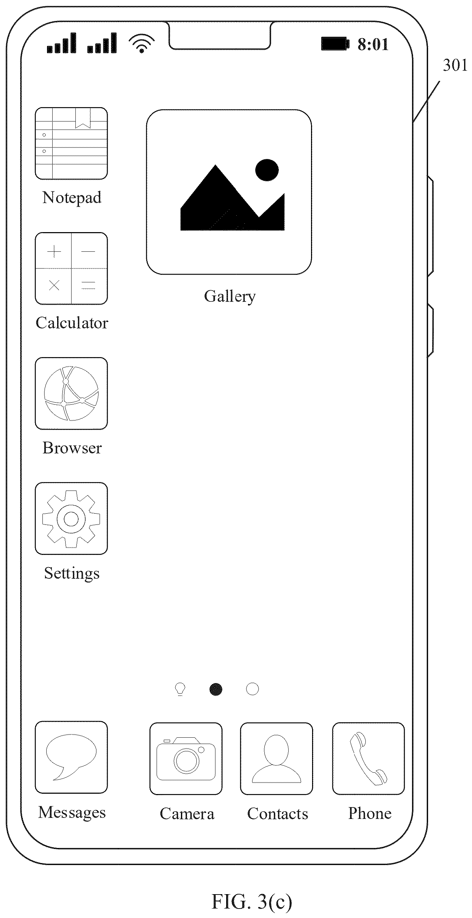

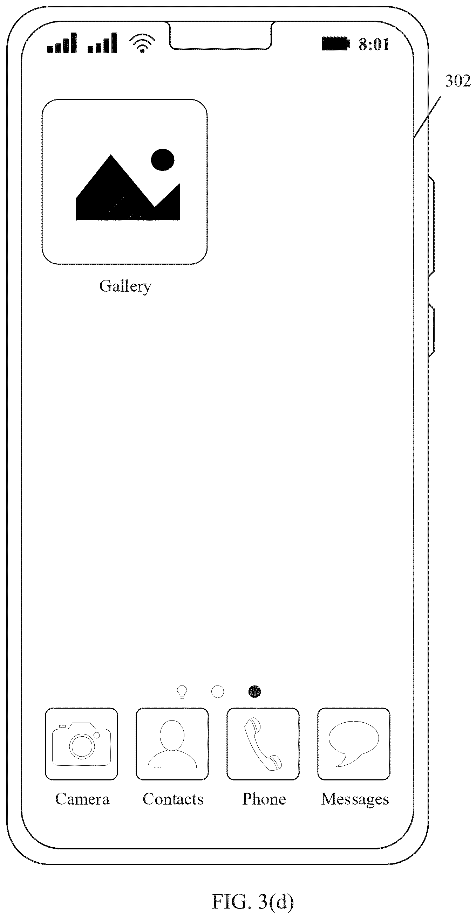

Example 2: The animation of flipping the desktop page may be: A window in which a current desktop is located gradually disappears in a panning manner, and a window in which a next desktop is located is gradually displayed on the display in a panning manner. The current desktop is an interface displayed before desktop page flipping, and the next desktop is an interface displayed after desktop page flipping. For example, an interface displayed by the electronic device when the animation of flipping the desktop page starts to be executed may be an interface shown in a diagram FIG. 3(a). In this case, a desktop window (that is, a window in which a desktop is located) is a window 301 shown in the diagram FIG. 3(a). In this case, content in the window 301 is original desktop content. After the animation of flipping the desktop page starts to be executed, content in a desktop window (that is, the window 301 shown in the diagram FIG. 3(a)) may be panned leftward, where content moving out of the window 301 disappears, and a part of content in another window (that is, a window 302 shown in a diagram FIG. 3(d)) is panned leftward into the window 301. An interface in the window 301 may be referred to as an original desktop, and an interface in the window 302 may be referred to as a target desktop. This process may be, for example, gradually changing from the window 301 shown in the diagram FIG. 3(a) to the window 301 shown in the diagram FIG. 3(b). In this process, content in the window 301 changes. The content in the window 301 changes from the original desktop content shown in the diagram FIG. 3(a) to a part of the original desktop content and a part of target desktop content shown in the diagram FIG. 3(b). In a process of continuing to execute the animation of flipping the desktop page, the content in the desktop window (which is the window 301 shown in the diagram FIG. 3(b) in this case) continues to be panned leftward, and the content in the window 302 continues to be moved into the window 301. This process may be, for example, gradually changing from the window 301 shown in the diagram FIG. 3(b) to the window 301 shown in the diagram FIG. 3(c). In a process of continuing to execute the animation of flipping the desktop page, the content in the desktop window (which is the window 301 shown in the diagram FIG. 3(c) in this case) continues to be panned leftward, and the content in the window 302 continues to be panned into the window 301. When all the original desktop content in the window 301 is replaced with the target desktop content, execution of the animation of flipping the desktop page ends. After execution of the animation of flipping the desktop page ends, an interface displayed by the electronic device may be an interface shown in the diagram FIG. 3(d). In this case, the desktop window is the window 302. The foregoing process of gradually changing from the window 301 (that is, a current desktop) shown in the diagram FIG. 3(a) to the window 302 (that is, a next desktop) shown in the diagram FIG. 3(d) is a process of displaying the animation of flipping the desktop page.

S106: When the electronic device determines that the animation of exiting the application window conflicts with the animation of flipping the desktop page, the electronic device determines whether to interrupt execution of the animation of exiting the application window; and performs step S107 if the electronic device determines to interrupt the execution of the animation of exiting the application window; or performs step S108 if the electronic device determines not to interrupt the execution of the animation of exiting the application window.

Because the electronic device receives the slide operation in the process of executing the animation of exiting the application window and starts to execute the animation of flipping the desktop page, the animation of flipping the desktop page conflicts with the animation of exiting the application window. When a priority of the animation of flipping the desktop page is higher than a priority of the animation of exiting the application window, the electronic device may stop executing the animation of exiting the application window, and execute the animation of flipping the desktop page. When a priority of the animation of exiting the application window is higher than a priority of the animation of flipping the desktop page, the electronic device may continue to execute the animation of exiting the application window, and does not execute the animation of flipping the desktop page. Priorities of different animations may be preset.

S107: The electronic device stops executing the animation of exiting the application window, and executes only the animation of flipping the desktop page.

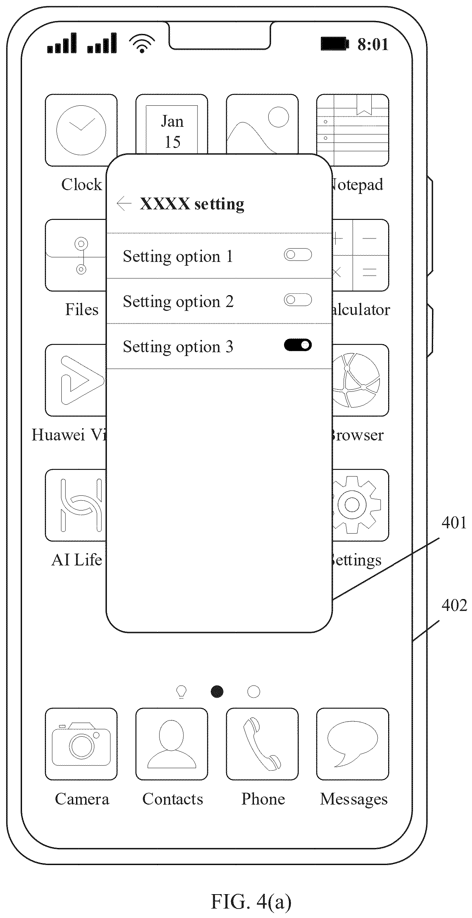

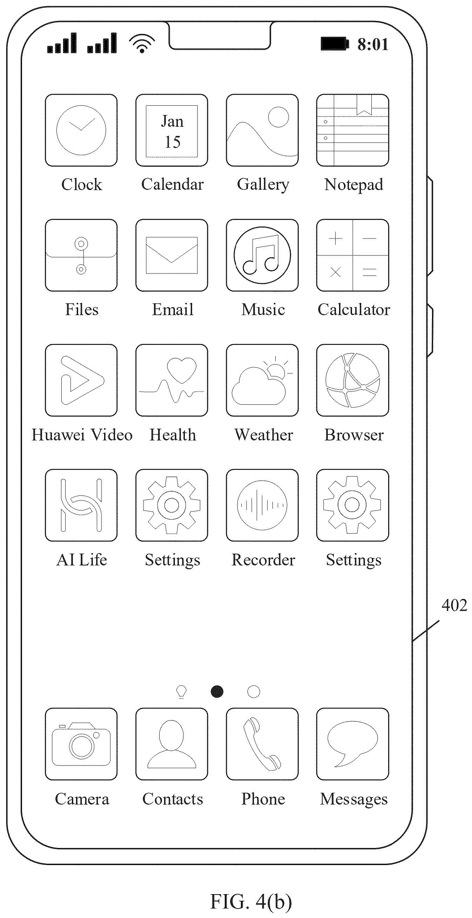

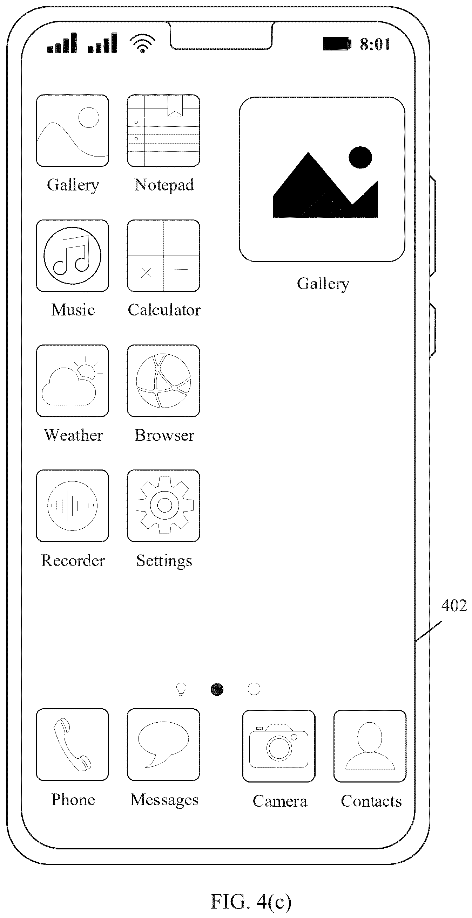

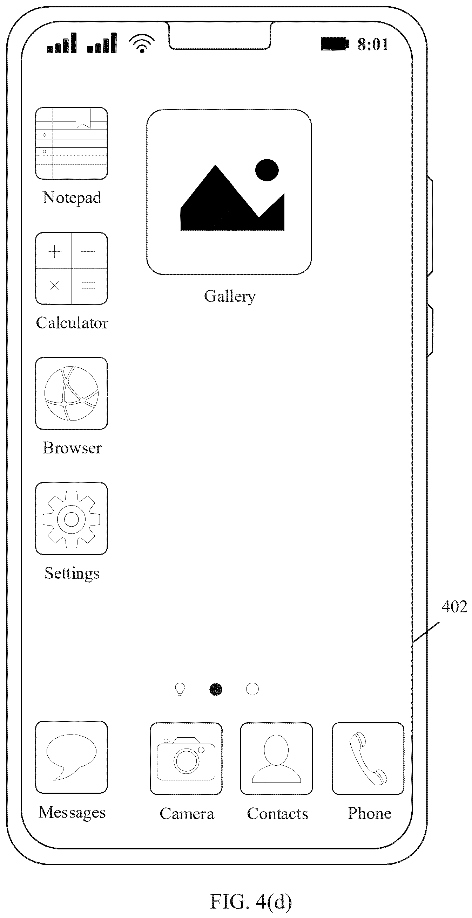

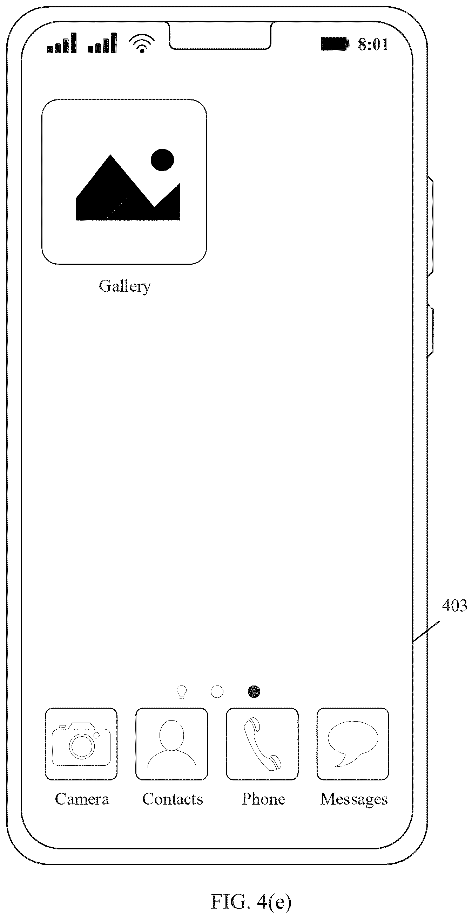

Example 3: Based on the foregoing example 1, in a process in which the electronic device executes the animation of exiting the application window, when the electronic device receives an indication for executing the animation of flipping the desktop page when displaying the interface shown in the diagram FIG. 2(b), and a priority of an application-level animation is higher than a priority of a system-level animation, the electronic device stops executing the animation of exiting the application window, and starts to perform the animation of flipping the desktop page. Specifically, when the electronic device receives the indication for executing the animation of flipping the desktop page when displaying an interface shown in a diagram FIG. 4(a) (that is, the interface shown in the diagram FIG. 2(b)), and the priority of the application-level animation is higher than the priority of the system-level animation, the electronic device first stops executing the animation of exiting the application window, that is, switches from the interface shown in the diagram FIG. 4(a) to an interface shown in a diagram FIG. 4(b). In this process, an original window 401 in the diagram FIG. 4(a) (that is, the setting window 202 shown in the diagram FIG. 2(b)) directly disappears; and an original desktop window, that is, a window 402, in the diagram FIG. 4(a) is completely presented, and is presented as the window 402 shown in the diagram FIG. 4(b). In this case, the electronic device may start to execute the animation of flipping the desktop page. In a process in which the electronic device performs the animation of flipping the desktop page, a window displayed by the electronic device gradually changes from the window 402 shown in the diagram FIG. 4(b) (equivalent to the window 301 shown in the diagram FIG. 3(a)) to the window 402 shown in the diagram FIG. 4(c) (equivalent to the window 301 shown in the diagram FIG. 3(b)), then gradually changes to the window 402 shown in the diagram FIG. 4(d) (equivalent to the window 301 shown in the diagram FIG. 3(c)), and then gradually changes to a window 403 shown in a diagram FIG. 4(e) (equivalent to the window 302 shown in the diagram FIG. 3(d)). For this process, refer to the change process of the animation of flipping the desktop page in the foregoing example 2, and details are not described herein again.

S108: The electronic device continues executing the animation of exiting the application window, and does not execute the animation of flipping the desktop page.

In the existing solution described in the foregoing example, the animation of exiting the application window is a system-level animation, and the animation of flipping the desktop page is an application-level animation. During display of the system-level animation, the configuration data of the window animation is transmitted by the window manager service to the SF through inter-process communication. During display of the application-level animation, the configuration data of the window animation is transmitted by the application to the SF through inter-process communication. In addition, the configuration data from the window manager service and the configuration data from the application act on different layers (the configuration data from the window manager service needs to act on a window created by the window manager service, and the configuration data from the application needs to act on a window created by the application). Therefore, at the same time, the SF side can compose a corresponding animation interface and send the animation interface for display based on configuration data from only one of the window manager service and the application. Therefore, an execution process of the animation of exiting the application window and an execution process of the animation of flipping the desktop page are independent and unaware of each other. As a result, when the two animations need to be executed at the same time, the execution processes of the two animations conflict with each other, and only a serial execution method or a method of selecting one for execution can be used to cope with the conflict.

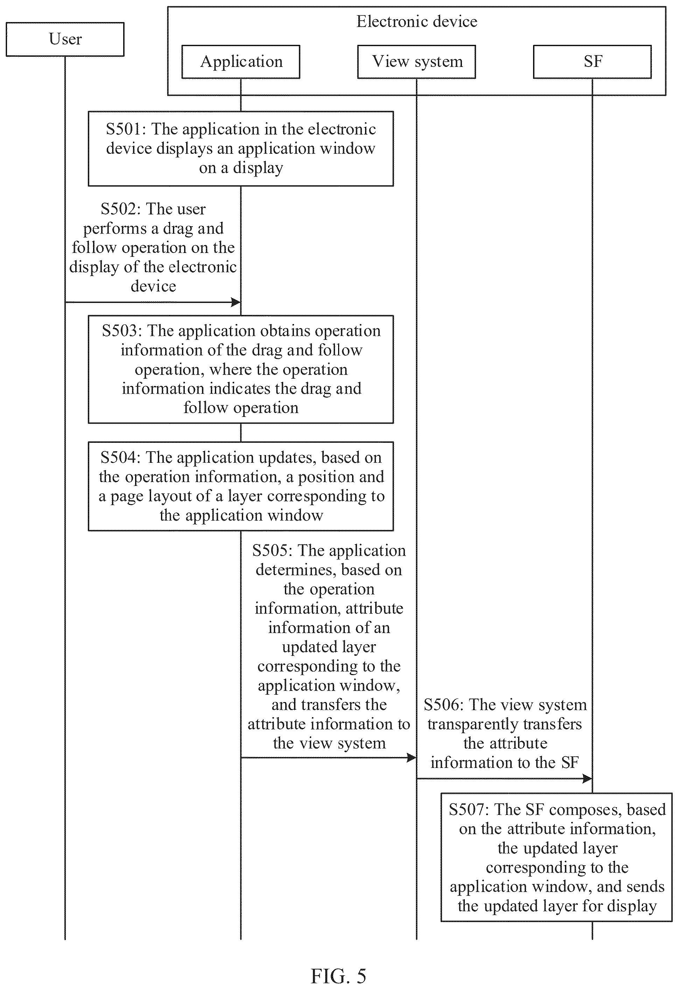

In addition, effect that a window and/or content displayed on a display of an electronic device moves or changes with a slide operation performed by a user on the display may be referred to as a drag and follow animation. For example, in a process of executing the foregoing animation of flipping the desktop page, in a time period in which the user performs a lateral slide operation, a process in which the application window (that is, the desktop) moves with the lateral slide operation of the user or a process in which content displayed on the display changes with the lateral slide operation of the user is a drag and follow animation. In a drag and follow phase, when the drag and follow animation is controlled and implemented by an application in the electronic device, the application first needs to obtain position information of a touch input (input) (that is, information indicating a position of an action point of the slide operation of the user on the display), and then updates, based on the position information, content (for example, a position of an application interface and a page layout) displayed on the display, to implement the drag and follow animation. Refer to FIG. 5, an implementation process of the drag and follow animation may include the following steps.

S501: The application in the electronic device displays an application window on the display.

S502: The user performs a drag and follow operation on the display of the electronic device.

For example, in a multi-task drag and follow scenario, the drag and follow operation may be a lateral slide operation on a multi-task window interface.

S503: The application in the electronic device obtains operation information of the drag and follow operation, where the operation information indicates the drag and follow operation.

Optionally, an input (input) service in the electronic device may be configured to receive or detect an input operation of the user, and transfer operation information of the input operation to another service for subsequent processing. Therefore, the application may obtain, from the input service, operation information of the slide operation performed by the user.

S504: The application updates, based on the operation information, a position and a page layout of a layer corresponding to the application window.

A user interface (user interface, UI) thread of the application may update, based on the position information, the position of the layer corresponding to the application window displayed on the display, and update the page layout of the layer based on a change of the position of the layer.

S505: The application determines, based on the operation information, attribute information of an updated layer corresponding to the application window, and transfers the attribute information to a view system.

S506: The view system transparently transfers the attribute information to an SF.

In a process in which the application transfers the attribute information to the view system, and then the view system transfers the attribute information to the SF, time is consumed for inter-process communication.

S507: The SF composes, based on the attribute information, the updated layer corresponding to the application window, and sends the updated layer for display.

The SF may apply configuration data to the current layer corresponding to the application window to obtain the updated layer corresponding to the application window. After the layer is sent for display, the position of the application window may be refreshed, that is, the drag and follow animation is implemented.

In the foregoing method for implementing the drag and follow animation, when the user performs the slide operation, a change of an action point of the slide operation on the display triggers the application in the electronic device to update the position and the page layout of the layer corresponding to the application window, so that the update of the layer drives refresh of the application window, thereby achieving effect that the application window is refreshed along with the slide operation. In a process in which the application transfers the attribute information of the layer to the SF, time is consumed for inter-process communication. This affects a window refresh rate, and even may cause lagging. Therefore, this solution has low drag and follow performance. In addition, during implementation of the drag and follow animation, the position and the page layout of the layer need to be refreshed in the UI thread of the application. This also causes performance lagging and low drag and follow performance.

Based on the foregoing problem, to improve display efficiency and display effect of a window animation, embodiments of this application provide a display method and an electronic device. In this solution, the display efficiency and the display effect of the window animation can be improved by performing the window animation in parallel, reducing performance overheads and time consumption of a window animation display process, or the like.

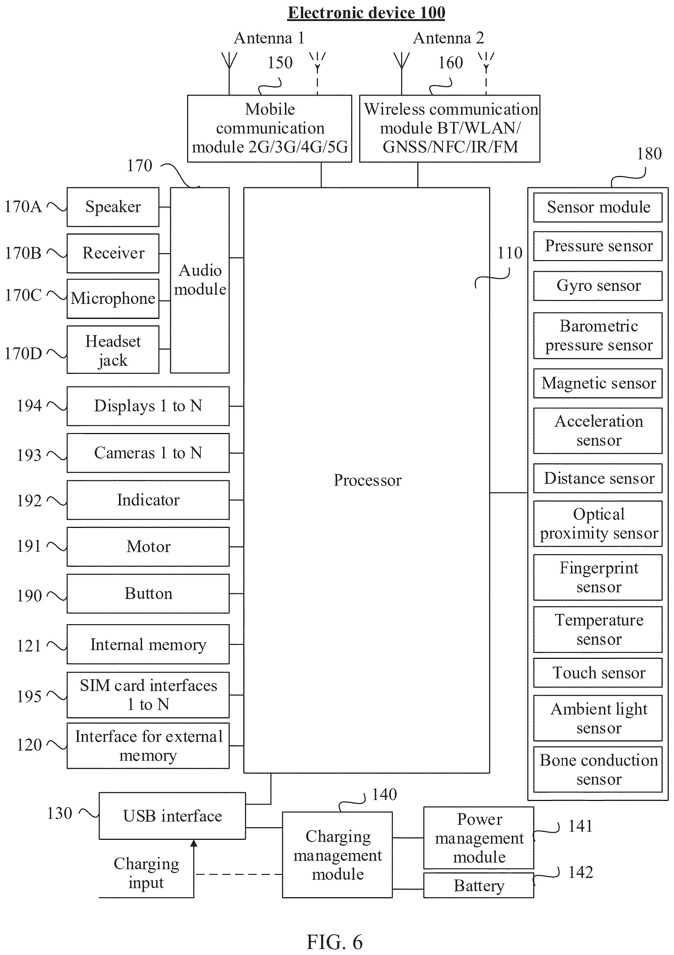

The following describes, with reference to FIG. 6, a structure of an electronic device to which a method provided in embodiments of this application is applicable.

As shown in FIG. 6, the electronic device 100 may include a processor 110, an interface 120 for external memory, an internal memory 121, a USB interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like.

The sensor module 180 may include a gyro sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 6 is merely an example, and does not constitute a limitation on the electronic device. In addition, the electronic device may have more or fewer components than those shown in the figure, or may combine two or more components, or may have different component configurations. The components shown in FIG. 5 may be implemented in hardware including one or more signal processing and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

Execution of the display method provided in embodiments of this application may be completed by the processor 110 by controlling or invoking another component. For example, a processing program in embodiments of this application stored in the internal memory 121 is invoked, or a processing program in embodiments of this application stored in a third-party device is invoked by using the interface 120 for external memory, to control the wireless communication module 160 to perform data communication with another device, so as to improve intelligence and convenience of the electronic device 100 and improve user experience. The processor 110 may include different components. For example, when a CPU and a GPU are integrated, the CPU and the GPU may cooperate to perform the display method provided in embodiments of this application. For example, in the display method, some algorithms are executed by the CPU, and some other algorithms are executed by the GPU, to achieve high processing efficiency.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1. The display 194 may be configured to display information entered by a user or information provided for the user and various graphical user interfaces (graphical user interface, GUI). For example, the display 194 may display a photo, a video, a web page, a file, or the like. For another example, the display 194 may display the user control interface (for example, a sound projection mode selection interface or a sound projection device selection interface) in embodiments of this application.

In embodiments of this application, the display 194 may be an integrated flexible display, or may be a spliced display including two rigid screens and one flexible screen located between the two rigid screens.

The camera 193 (a front-facing camera or a rear-facing camera, or a camera that can serve as both a front-facing camera and a rear-facing camera) is configured to capture a static image or a video. Usually, the camera 193 may include a photosensitive element such as a lens group and an image sensor. The lens group includes a plurality of lenses (convex lens or concave lens), and is configured to: capture an optical signal reflected by a to-be-photographed object, and transfer the captured optical signal to the image sensor. The image sensor generates an original image of the to-be-photographed object based on the optical signal.

The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, code of an application program (for example, a function corresponding to the solution of this application), and the like. The data storage area may store data created in a process of using the electronic device 100, and the like.

The internal memory 121 may further store one or more computer programs corresponding to the algorithms in the solutions of this application. The one or more computer programs are stored in the internal memory 121 and are configured to be executed by the one or more processors 110. The one or more computer programs include instructions, and the instructions may be used to perform steps in the following embodiments.

In addition, the internal memory 121 may include a high-speed random access memory, and may further include a non-volatile memory, such as at least one magnetic disk storage component, a flash memory component, and a universal flash storage (universal flash storage, UFS).

Certainly, code of the algorithms in the solutions of embodiments of this application may alternatively be stored in an external memory. In this case, the processor 110 may run, through the interface 120 for external memory, the code of the algorithms in the solutions of this application stored in the external memory.

The sensor module 180 may include a gyro sensor, an acceleration sensor, an optical proximity sensor, a fingerprint sensor, a touch sensor, and the like.

The touch sensor is also referred to as a "touch panel". The touch sensor may be disposed on the display 194. The touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of a touch event. Visual output related to the touch operation may be provided by using the display 194. In some other embodiments, the touch sensor may alternatively be disposed on a surface of the electronic device 100 at a position different from that of the display 194.

For example, the display 194 of the electronic device 100 displays a home screen, and the home screen includes icons of a plurality of applications (for example, a camera application). For example, the user may tap an icon of the camera application on the home screen by using the touch sensor, to trigger the processor 110 to start the camera application and turn on the camera 193. The display 194 displays an interface of the camera application, for example, a viewfinder interface.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be multiplexed to improve antenna utilization. For example, the antenna 1 may be multiplexed into a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110. In embodiments of this application, the mobile communication module 150 may be further configured to exchange information with another device.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio apparatus (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2. In embodiments of this application, the wireless communication module 160 is configured to establish a connection to another electronic device, and exchange data. Alternatively, the wireless communication module 160 may be configured to access an access point device, send a control instruction to another electronic device, or receive data sent by another electronic device.

In addition, the electronic device 100 may implement an audio function, such as music playing and recording, by using the audio module 170, the speaker 170A, the receiver 170B, the microphone 170C, the headset jack 170D, the application processor, and the like. The electronic device 100 may receive input from the button 190, and generate button signal input related to user settings and function control of the electronic device 100. The electronic device 100 may generate a vibration prompt (for example, an incoming call vibration prompt) by using the motor 191. The indicator 192 in the electronic device 100 may be an indicator light, and may indicate a charging status or a power change, or may indicate a message, a missed call, a notification, or the like. The SIM card interface 195 in the electronic device 100 is configured to connect to a SIM card. The SIM card may be inserted into the SIM card interface 195 or pulled out of the SIM card interface 195, to implement contact with or separation from the electronic device 100.

It should be understood that, during actual application, the electronic device 100 may include more or fewer components than those shown in FIG. 6. This is not limited in embodiments of this application. The electronic device 100 shown in the figure is merely an example, and the electronic device 100 may have more or fewer components than those shown in the figure, or may combine two or more components, or may have different component configurations. The components shown in the figure may be implemented in hardware including one or more signal processing and/or application-specific integrated circuits, software, or a combination of hardware and software.

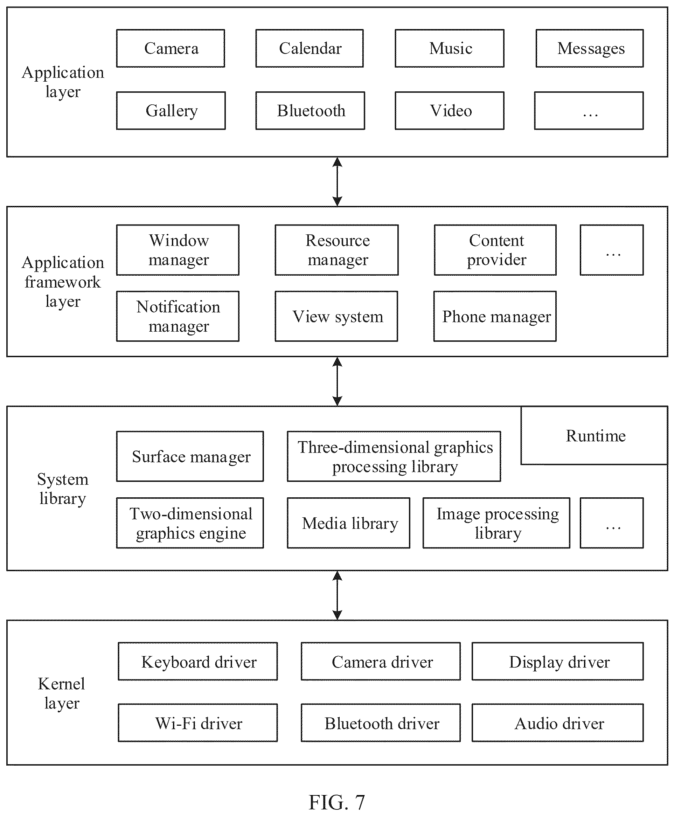

A software system of the electronic device 100 may use a layered architecture, an event-driven architecture, a microkernel architecture, a micro-service architecture, or a cloud architecture. In the layered architecture, software is divided into several layers, and each layer has a clear role and task. The layers communicate with each other through a software interface. For example, as shown in FIG. 7, the software architecture may be divided into four layers: an application layer, an application framework (framework, FWK) layer, a runtime and system library, and a (Linux) kernel (kernel) layer from top to bottom.

The application layer is an uppermost layer of the operating system, includes a native application of the operating system, such as Camera, Gallery, Calendar, Bluetooth, Music, Video, and Messages, and may further include a third-party application. An application program in embodiments of this application is briefly referred to as an application (application, APP), and is a software program that can implement one or more specific functions. Generally, a plurality of applications may be installed in the electronic device, for example, a camera application and an email application. The application mentioned in the following may be a system application installed before delivery of the electronic device, or may be a third-party application downloaded from a network or obtained from another electronic device by a user in a process of using the electronic device.

Certainly, a developer may compile an application and install the application at the layer. In a possible implementation, the application may be developed by using a Java language, and is completed by invoking an application programming interface (application programming interface, API) provided by the application framework layer. A developer may interact with a bottom layer (for example, the kernel layer) of the operating system through an application framework, to develop an application of the developer.

The application framework layer is an API and a programming framework of the application layer. The application framework layer may include some predefined functions. The application framework layer may include a window manager, a content provider, a view system, a phone manager, a resource manager, a notification manager, and the like.

The window manager is configured to manage window programs. The window manager may obtain a display size, determine whether there is a status bar, lock a display (or a screen), take a screenshot, and the like.

The content provider is configured to store and obtain data and make the data accessible to the application. The data may include information such as a file (for example, a document, a video, an image, or audio), and a text.

The view system includes visual controls, for example, controls that display content such as a text, a picture, and a document. The view system may be configured to construct an application. An interface in a display window may include one or more views. For example, a display interface including an SMS notification icon may include a text display view and a picture display view.

The phone manager is configured to provide a communication function of the electronic device. The notification manager enables the application to display notification information in a status bar, and may be configured to transfer a message of a notification type. The information may automatically disappear after a short stay without user interaction.

The runtime includes a core library and a virtual machine. The runtime is responsible for scheduling and management of the system.

The core library of the system may include two parts: a function that needs to be invoked by using the Java language, and a core library of the system. The application layer and the application framework layer run in the virtual machine. Java is used as an example. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to manage a display subsystem and provide fusion of two-dimensional and three-dimensional layers for a plurality of applications. The media library supports playback and recording in a plurality of commonly used audio and video formats, and static image files. The media library can support a plurality of audio and video coding formats, such as MPEG-4, H.564, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel layer provides a core system service of the operating system. For example, security, memory management, process management, a network protocol stack, and a driver model are all implemented based on the kernel layer. The kernel layer is also used as an abstraction layer between hardware and software stacks. The layer has a plurality of drivers related to the electronic device, and has the following main drivers: a display driver, a keyboard driver used as an input device, a flash driver based on a memory technology device, a camera driver, an audio driver, a Bluetooth driver, a Wi-Fi driver, and the like.

It should be understood that the foregoing function service is merely an example. During actual application, the electronic device may be divided into more or fewer function services based on another factor, or may be divided into functions of each service in another manner, or may not be divided into function services, but work as a whole.

The following describes in detail the solutions provided in embodiments of this application.

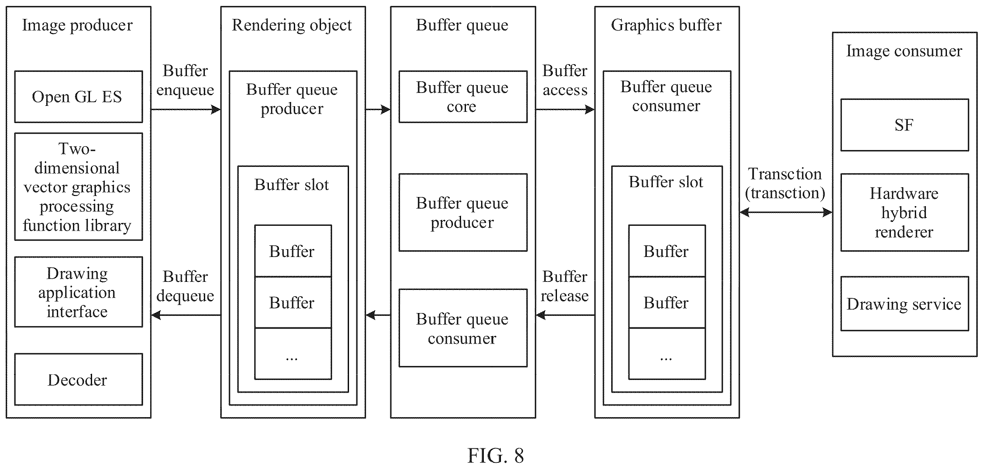

FIG. 8 is a diagram of an architecture of a control system according to an embodiment of this application. The control system may be deployed in an electronic device. As shown in FIG. 8, the control system may include an image producer, an image buffer, and an image consumer.

The image producer is configured to generate layer content (or referred to as layer data), that is, rendering object (surface) data, required for composing an image. The surface may also be referred to as a rendering surface or the like. A name of the surface is not limited in embodiments of this application. The image producer may be a system service, a process, an application, or the like in the electronic device. For example, the image producer may be an open graphics library for an embedded system (Open Graphics Library for Embedded Systems, OpenGL ES), a two-dimensional vector graphics processing function library (for example, Skia), a drawing application programming interface (for example, Vulkan), or a decoder (Decoder).

In some embodiments of this application, the image buffer may include a surface service, a buffer queue, and a graphics buffer (blast BufferQueue, BBQ) service. The layer service is configured to connect the image producer and the buffer queue, and may be specifically configured to transfer a buffer including the layer content generated by the image producer to the buffer queue, or transfer a blank buffer in the buffer queue to the image producer, or the like. The buffer queue may be configured to connect the image producer and the image consumer, and may be specifically configured to transfer a buffer from the image producer to the image consumer, so that the image consumer composes an interface and sends the interface for display based on data in the buffer. The BBQ service is configured to connect the buffer queue and the image consumer, and may be specifically configured to transfer a buffer in the buffer queue from the image producer to the image consumer, or transfer a blank buffer processed by the image consumer back to the buffer queue.

In some embodiments of this application, the surface service may include a buffer queue producer (BufferQueue Producer). The buffer queue producer may be configured to provide a basic interface for operating the buffer queue. The buffer queue producer may include a buffer slot (buffer slots). The buffer slot is a set of buffers, and is a unit core for the image producer to operate buffer data. The buffer slot may include at least one buffer (buffer/GraphicBuffer).

In some embodiments of this application, the buffer queue may include a buffer queue core (BufferQueueCore), a buffer queue producer (BufferQueueProducer), and a buffer queue consumer (BufferQueueConsumer). The buffer queue core may be configured to maintain a basic data structure of the buffer queue. The buffer queue producer and the buffer queue consumer may be configured to provide a basic interface for operating the buffer queue.

In some embodiments of this application, the BBQ service may include a buffer queue consumer. The buffer queue consumer may be configured to provide a basic interface for operating the buffer queue. The buffer queue consumer may include a buffer slot. The buffer slot is a set of buffers, and is a unit core for the image consumer to operate buffer data. The buffer slot may include at least one buffer.

The image consumer is configured to consume a buffer, in the buffer queue, into which the layer data is written, and is specifically configured to combine the layer data in the buffer and send the combined layer data to a display for display. In some embodiments of this application, the image consumer may include an SF, a hardware hybrid renderer (hardware composer), and a drawing service (for example, an open graphics library for an embedded system shown in FIG. 7). The SF may receive the buffer from the buffer queue, and use the hardware hybrid renderer and the drawing service to combine the data in the buffer into an interface and send the interface for display.

In the control system shown in FIG. 8, an arrow may represent a transfer direction of the buffer.

In some embodiments of this application, the control system in FIG. 8 may be deployed in the system architecture shown in FIG. 7, for example, may be deployed at a structural layer such as the application framework layer or the system library in the system architecture shown in FIG. 7.

In embodiments of this application, content in a window on the display of the electronic device may be displayed by using the foregoing method.

It should be understood that the system architecture of the control system described above is merely an example. In actual application, the control system may alternatively include more or fewer functional modules (or services), or functions of modules may be obtained through division in another manner, or division into functional modules may not be performed but the functional modules work as a whole.

The following describes the solutions provided in this application with reference to specific embodiments.

### Embodiment 1

In the solution provided in this embodiment, for a system-level animation, a system service in an electronic device may directly deliver configuration data (or a configuration parameter) of a window animation to an SF. In addition, for an application-level animation, an application in the electronic device may define, in a buffer applied in a buffer dequeue manner, a field used to record configuration data of a window animation, and directly write the configuration data of the window animation into the field. Then, the buffer into which the configuration data is written is transferred to a buffer queue in a buffer enqueue (queueBuffer/queue) manner. The buffer queue may transfer the buffer into which the configuration data is written to the SF, so that the SF obtains the configuration data of the window animation in the buffer. Based on the foregoing method, the SF can obtain configuration data of a system-level animation, and can also obtain configuration data of an application-level animation. When the system-level animation and the application-level animation are triggered at the same time, the SF can obtain the configuration data of the system-level animation and the configuration data of the application-level animation at the same time. When the configuration data of the system-level animation is applied to a layer created by a window manager service, the configuration data of the application-level animation is also applied to the layer. Then, an animation interface is further composed and sent for display. In this way, the system-level animation and the application-level animation can be executed in parallel.

The following describes the foregoing method with reference to a specific procedure by using an example of a scenario in which an animation of exiting an application window and an animation of flipping a desktop page are executed in parallel.

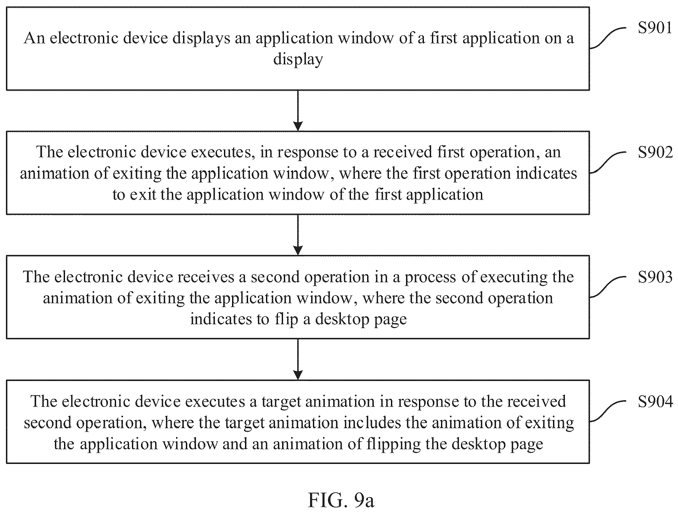

Refer to FIG. 9a. A display method provided in an embodiment of this application may include the following steps.

S901: An electronic device displays an application window of a first application on a display.

For example, the first application may be Settings, and the application window of the first application may be a window in which the interface shown in the diagram FIG. 2(a) is located.

S902: The electronic device executes, in response to a received first operation, an animation of exiting the application window, where the first operation indicates to exit the application window of the first application.

The animation of exiting the application window is an application window exiting animation.

In some embodiments of this application, a process of executing the animation of exiting the application window may include the following steps A1 to A3.

A1: A window manager service in the electronic device determines, based on the first operation, configuration data of the animation of exiting the application window.

In some embodiments of this application, the configuration data of the animation may include attribute information of an interface, a view, or a layer corresponding to the animation. For example, the attribute information may include information such as a position, a size (or dimensions), a rotation angle, a scaling size, a radius, and a transparency.

A2: The window manager service transfers the configuration data of the animation of exiting the application window to an SF in the electronic device.

In an optional implementation, the window manager service may transfer, to the SF in an inter-process communication manner, the configuration data of the animation of exiting the application window. In another optional implementation, the window manager service may transfer the configuration data of the animation of exiting the application window to a shared memory, and the SF may obtain the configuration data from the shared memory. For example, the shared memory may be a buffer queue.

A3: The SF composes, based on the configuration data of the animation of exiting the application window, an interface of the animation of exiting the application window, and sends the interface for display.

For specific implementations of the foregoing steps A1 to A3, refer to the method described in step 103 in the foregoing embodiment, and details are not described herein again.

For example, the first operation may be an operation of sliding up from the bottom of the display by the user.

For example, a complete animation of exiting the application window may be the animation described in the example 1 in the foregoing embodiment.

S903: The electronic device receives a second operation in a process of executing the animation of exiting the application window, where the second operation indicates to flip a desktop page.

For example, the second operation may be a lateral slide operation performed by the user on the display, for example, may be a left-to-right slide operation or a right-to-left slide operation.

S904: The electronic device executes a target animation in response to the received second operation, where the target animation includes the animation of exiting the application window and an animation of flipping the desktop page.

The animation of flipping the desktop page is a desktop page flipping animation.

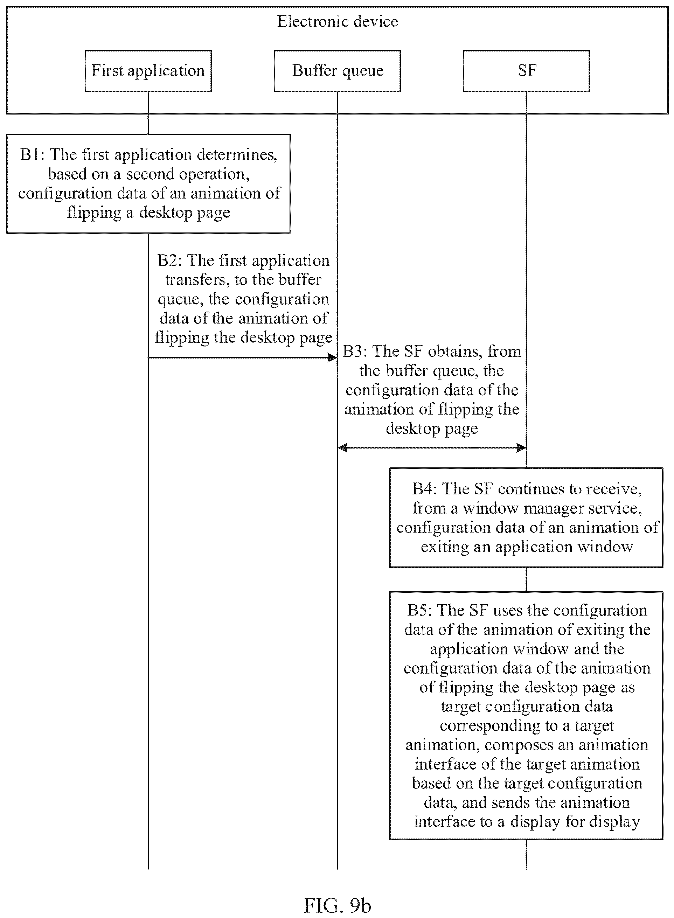

In some embodiments of this application, as shown in FIG. 9b, a process of executing the target animation may include the following steps B1 to B4.

B1: The first application in the electronic device determines, based on the second operation, configuration data of the animation of flipping the desktop page.

B2: The first application transfers, to a buffer queue, the configuration data of the animation of flipping the desktop page.

In some embodiments of this application, after determining the configuration data of the animation of flipping the desktop page, the first application does not need to update and transfer the configuration data by using the view framework, but may directly transfer the configuration data to the buffer queue, so that the buffer queue transfers the configuration data to the SF, and then the SF composes an animation interface based on the configuration data and sends the interface for display. The first application may obtain a blank buffer in the buffer queue in a buffer dequeue (dequeueBuffer/dequeue) manner. After obtaining the buffer, the first application may set, in the buffer, a specified field used to record the configuration data of the animation of flipping the desktop page, and write the configuration data of the animation of flipping the desktop page into the specified field of the buffer. After the configuration data is written, the first application may transfer the buffer to the buffer queue in a buffer enqueue manner, so as to implement effect of transferring the configuration data of the animation of flipping the desktop page to the buffer queue. Based on the foregoing method, the configuration data of the animation of flipping the desktop page may be transferred to the SF in a manner similar to a transfer manner of layer content of a layer corresponding to the desktop, that is, transferred to the SF by using the buffer queue.

B3: The SF obtains, from the buffer queue, the configuration data of the animation of flipping the desktop page.

B4: The SF continues to receive, from the window manager service, configuration data of the animation of exiting the application window.

Optionally, step B3 and step B4 may be performed in any sequence.

In some embodiments of this application, step B3 and step B4 may be performed simultaneously. In one aspect, in the foregoing step B3, the SF may obtain, in a manner of obtaining a buffer (acquirebuffer/acquire) (or referred to as buffer access or the like), the buffer into which the configuration data is written in the buffer queue. After obtaining the buffer, the SF may determine whether data of the specified field exists in the buffer. If the data exists, the SF may obtain the configuration data of the animation of flipping the desktop page, and may use the data in the specified field (that is, the configuration data of the animation of flipping the desktop page) as configuration data of a to-be-displayed animation. In another aspect, in the foregoing step B4, the SF may continue to receive, from the window manager service, the configuration data of the animation of exiting the application window, and also use the received configuration data of the animation of exiting the application window as configuration data of the to-be-displayed animation. The to-be-displayed animation is the target animation.

In some embodiments of this application, the first application may also mark, by using a layer identifier, the data of the specified field, that is, the configuration data of the animation of flipping the desktop page. The layer identifier is an identifier of a layer created by the window manager service (that is, a layer created by the window manager service for carrying the animation of exiting the application window). The first application may obtain the layer identifier from the window manager service.

In the foregoing method, if the SF determines that the data of the specified field does not exist in the buffer, the SF may use only the configuration data of the animation of exiting the application window as the configuration data of the to-be-displayed animation.

B5: The SF uses the configuration data of the animation of exiting the application window and the configuration data of the animation of flipping the desktop page as target configuration data corresponding to the target animation, composes an animation interface of the target animation based on the target configuration data, and sends the animation interface to the display for display.

In the foregoing method, the SF may obtain the configuration data of the animation of exiting the application window from the window manager service; and the SF may obtain the configuration data of the animation of flipping the desktop page from the application by using the buffer queue. Therefore, the SF may use both the configuration data of the animation of exiting the application window and the configuration data of the animation of flipping the desktop page as the configuration data of the to-be-displayed animation, and apply the configuration data to the layer created by the window manager service, so as to implement composition of the animation interface. After the animation interface is composed, the SF may send the animation interface to the display for display, so as to implement parallel execution of the animation of exiting the application window and the animation of flipping the desktop page. Therefore, in the foregoing method, the electronic device may simultaneously display the animation of exiting the application window and the animation of flipping the desktop page, so that better display effect can be achieved. In addition, as a shared memory, the buffer queue has a feature of efficient access. Therefore, fast and accurate data processing (for example, data transfer) can be implemented. This helps improve efficiency of animation display.

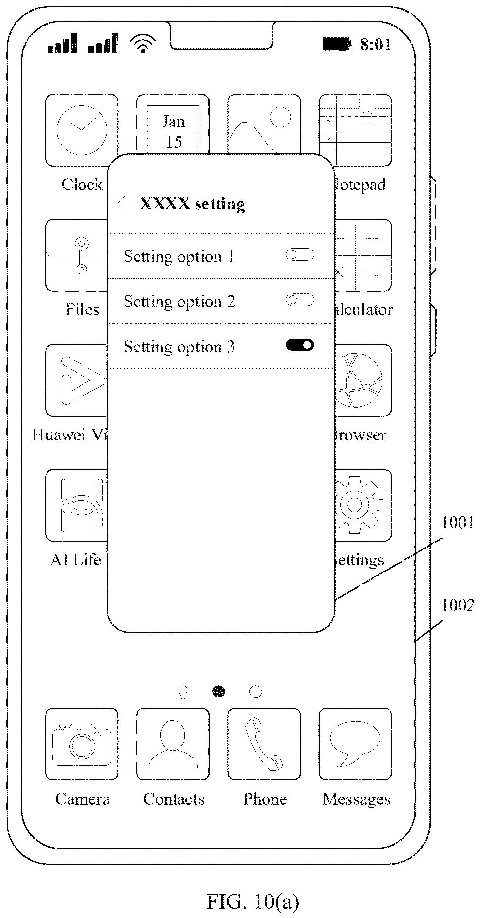

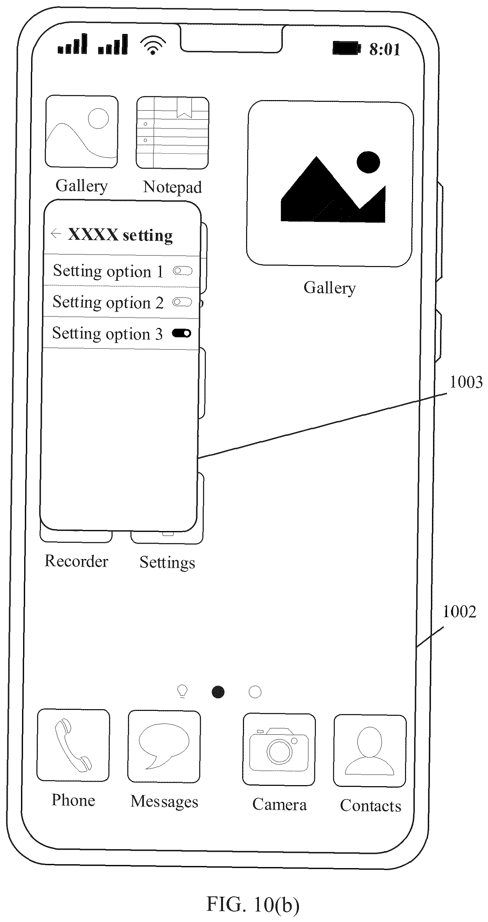

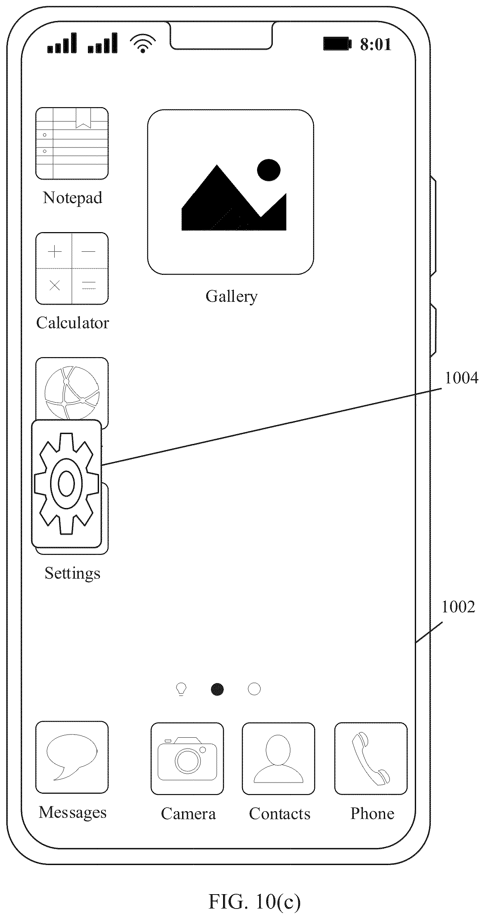

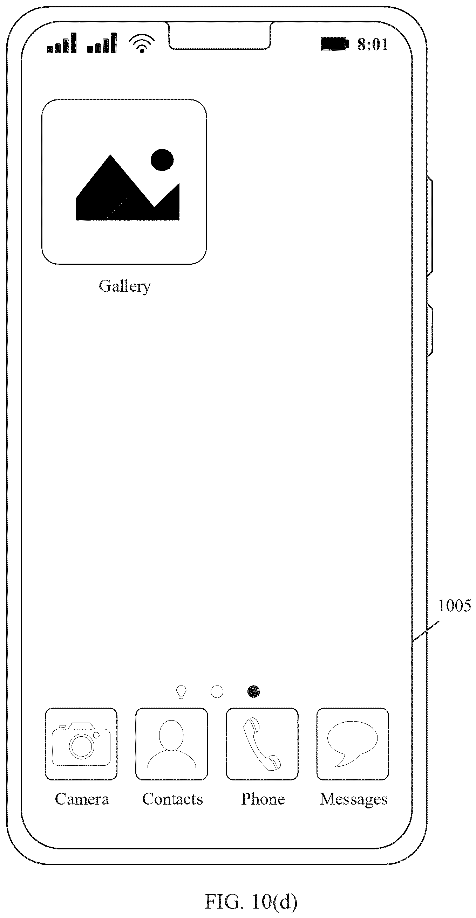

For example, in a process in which the electronic device displays the animation of exiting the application window (that is, the animation described in the example 1 in the foregoing embodiment), as shown in FIG. 10(a) to FIG. 10(d), if the electronic device receives a second operation when displaying an interface shown in the diagram FIG. 10(a) (that is, the interface shown in the diagram FIG. 2(b)), the electronic device further displays the animation of flipping the desktop page in a process of continuing to display the remaining animation of exiting the application window. Specifically, if the electronic device receives the second operation when displaying the interface shown in the diagram FIG. 10(a) (that is, the interface shown in the diagram FIG. 2(b)), the electronic device may switch from the interface shown in the diagram FIG. 10(a) to an interface shown in the diagram FIG. 10(b). An original setting window 1001 (that is, the setting window 202 shown in the diagram FIG. 2(b)) in the diagram FIG. 10(a) is gradually reduced and panned leftward, and then becomes a setting window 1003 shown in the diagram FIG. 10(b). Content in an original desktop window, that is, a window 1002, in the diagram FIG. 10(a) is gradually panned leftward, and some content in a window 1005 in the diagram FIG. 10(d) is gradually panned leftward to the window 1002 in the diagram FIG. 10(a). Therefore, the window 1002 in the diagram FIG. 10(a) gradually changes to the window 1002 shown in the diagram FIG. 10(b). In a process of continuing to execute the animation, the window 1003 shown in the diagram FIG. 10(b) continues to be reduced, and content in the window 1002 shown in the diagram FIG. 10(b) continues to be panned leftward. For example, the interface shown in the diagram FIG. 10(b) may gradually become an interface shown in the diagram FIG. 10(c). The setting window 1003 shown in the diagram FIG. 10(b) may change to a setting window 1004 shown in the diagram FIG. 10(c) (the setting window 1004 is a window obtained after the setting window 1003 is reduced and window content is adjusted), and content in the window 1002 shown in the diagram FIG. 10(b) gradually changes to content in the window 1002 shown in the diagram FIG. 10(c). In a process of continuing to execute the animation, the window 1004 shown in the diagram FIG. 10(c) continues to be reduced, and may disappear when being reduced to a specific size, and content in the window 1002 shown in the diagram FIG. 10(c) continues to be panned leftward. When the window 1004 shown in the diagram FIG. 10(c) disappears, and all original desktop content in the window 1002 shown in the diagram FIG. 10(a) is replaced with target desktop content (that is, content in the window 1005 shown in the diagram FIG. 10(d)), overall animation execution ends. After overall animation execution ends, an interface displayed by the electronic device may be an interface shown in the diagram FIG. 10(d). In this case, the desktop window is the window 1005. The foregoing process of gradually changing from the interface shown in the diagram FIG. 10(a) to the interface shown in the diagram FIG. 10(d) is a display process of executing in parallel the animation of exiting the application window and the animation of flipping the desktop page. It should be noted that, the interface shown in the diagram FIG. 10(a) to the interface shown in the diagram FIG. 10(d) are merely examples of some interfaces in an animation display process, rather than all animation interfaces. Therefore, no limitation is imposed on an interface in an animation display process of the electronic device.

Based on the foregoing method, when receiving a desktop page flipping operation in a process of displaying the animation of exiting the application window, the electronic device may simultaneously display the animation of exiting the application window and the animation of flipping the desktop page. Compared with a conventional solution in which only one animation can be displayed at the same time, the foregoing method has better animation display effect, and user experience is better.

### Embodiment 2

In a solution provided in this embodiment, for display of a drag and follow animation, when information about a drag and follow operation performed on a display of an electronic device is transferred to an application, the application may update, based on the received operation information, attribute information of a layer corresponding to an application window, and may transfer the attribute information to a shared memory. An SF may obtain the attribute information from the shared content, and apply the attribute information to the layer corresponding to the application window, to obtain an updated layer. After the SF sends the updated layer to the display for display, the drag and follow animation can be implemented. The attribute information on an application side may be directly transferred to the SF by using the shared memory, and the SF refreshes the layer based on the attribute information. Therefore, time consumed in inter-process communication when the application transfers the attribute information by using a view framework can be reduced or avoided, thereby improving a processing speed. In addition, performance overheads and time consumption caused by refreshing a layer position and a page layout in a UI thread of the application can be reduced or avoided. Therefore, the foregoing solution can improve processing performance and drag and follow performance of the drag and follow animation.

For example, the shared memory in this embodiment of this application may be a buffer queue.

The following uses a drag and follow animation display scenario as an example to describe the foregoing method with reference to a specific procedure by using an example in which the shared memory is the buffer queue.

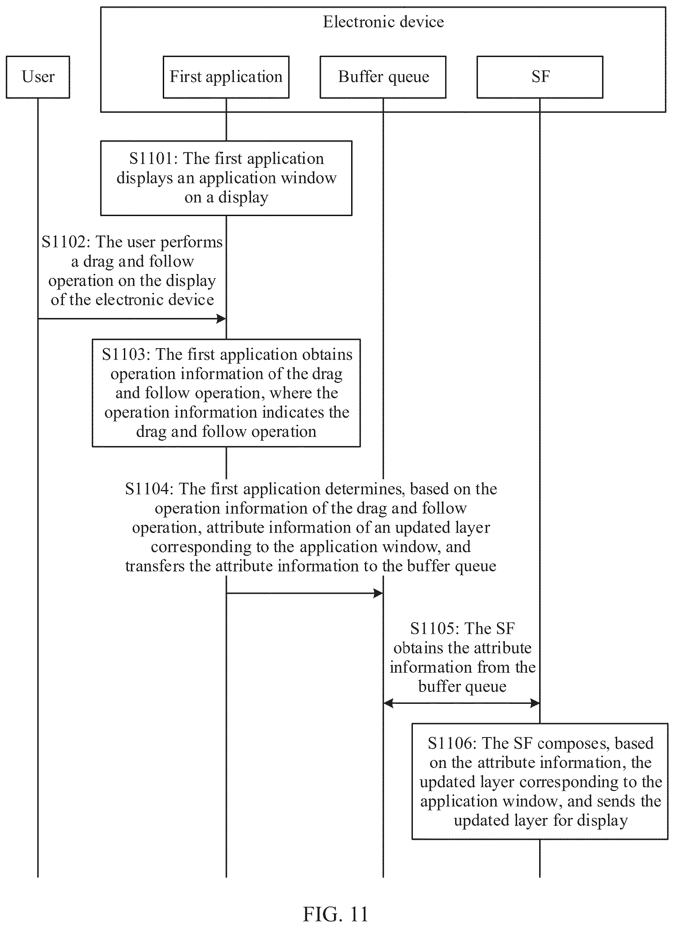

Refer to FIG. 11. A display method provided in an embodiment of this application may include the following steps.

S1101: A first application in an electronic device displays an application window on a display.

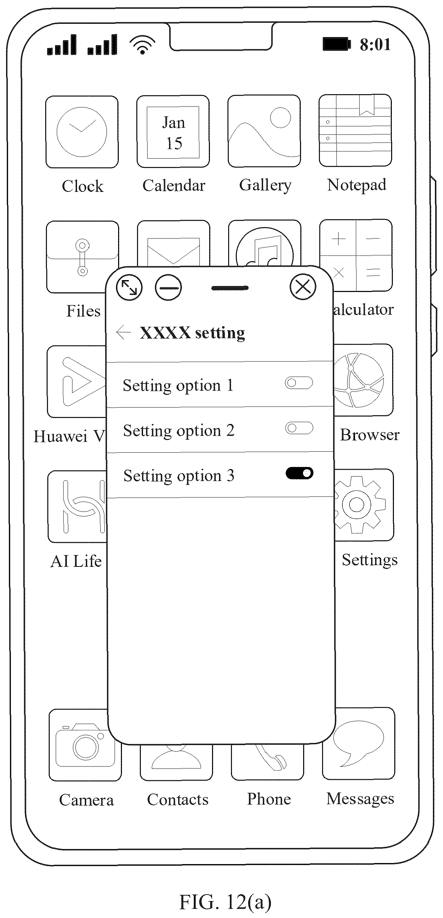

For example, in a floating window drag and follow scenario, the first application may be Settings, and the application window may be a floating window of Settings shown in the diagram FIG. 12(a).

S1102: A user performs a drag and follow operation on the display of the electronic device.

The drag and follow operation may be an operation of sliding after selecting a window/control/content on the display. For example, in a multi-task drag and follow scenario, the drag and follow operation may be an operation of sliding laterally (for example, sliding left and right) after sliding upward from the bottom of the display. For another example, the drag and follow operation may be an operation of sliding after touching and holding to select a floating window on the display.

For example, in the foregoing floating window drag and follow scenario, the drag and follow operation may be an operation of sliding upward after selecting the floating window of Settings.

S1103: The first application obtains operation information of the drag and follow operation, where the operation information indicates the drag and follow operation.

The operation information may specifically indicate an action point of the drag and follow operation on the display. In some embodiments of this application, the operation information may further indicate a window or a layer on which the drag and follow operation acts. For example, the operation information may include identification information of the window or the layer on which the drag and follow operation acts.

Optionally, an input service in the electronic device may be configured to receive or detect an input operation, that is, the drag and follow operation, of the user, and transfer the operation information of the drag and follow operation to another service for subsequent processing. Therefore, the application may obtain, from the input service, the operation information of the drag and follow operation performed by the user.

For example, in the foregoing floating window drag and follow scenario, the operation information may include: position information of the action point of the drag and follow operation on the display, and an identifier of the layer on which the drag and follow operation acts (that is, an identifier of a layer corresponding to the floating window of Settings).

S1104: The first application determines, based on the operation information of the drag and follow operation, attribute information of an updated layer corresponding to the application window, and transfers the attribute information to a buffer queue.

S1105: An SF obtains the attribute information from the buffer queue.

In some embodiments of this application, the SF may obtain, from the buffer queue based on an identifier of the layer corresponding to the application window, attribute information corresponding to the identifier, and apply the attribute information to the layer indicated by the identifier.

S1106: The SF composes, based on the attribute information, the updated layer corresponding to the application window, and sends the updated layer for display.

The SF may apply (or use) configuration data to the layer corresponding to the current application window to obtain the updated layer corresponding to the application window. After the layer is sent for display, the position of the application window may be refreshed, that is, the drag and follow animation is implemented.

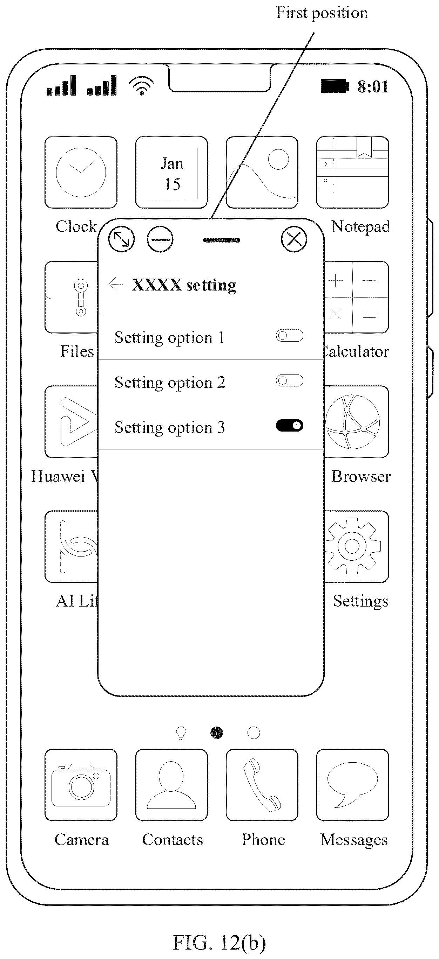

For example, in the foregoing floating window drag and follow scenario, when the action point of the drag and follow operation is at a first position shown in the diagram FIG. 12(b), the attribute information obtained by the SF may include position information indicating the first position. In this case, the SF may use the position (that is, the first position) indicated by the position information as a display position of an updated floating window on the display, accordingly compose a layer corresponding to the updated floating window, and send the layer for display. In this way, the drag and follow animation of the floating window is implemented. For example, after the drag and follow animation of the floating window is implemented in the foregoing manner, an interface displayed on the display is an interface shown in the diagram FIG. 12(b). In the interface, a position of the floating window is the first position.

In the foregoing method, the application may directly write the attribute information of the layer into the shared memory, for example, the buffer queue. Each time the display interface is refreshed, the SF may extract the attribute information of the layer from the buffer queue, compose the layer based on the attribute information, and send the layer for display. Based on this, the attribute information of the layer on the application side can be directly transferred to the SF, thereby reducing time consumption of inter-process communication, reducing frame freezing, and improving drag and follow performance. In addition, a large quantity of operations on a UI thread on the application side can be avoided, thereby reducing performance overheads, reducing frame freezing, and improving drag and follow performance of the drag and follow animation.

It should be noted that specific implementation procedures provided in the foregoing embodiments are merely examples of the method procedures applicable to embodiments of this application. An execution sequence of the steps may be correspondingly adjusted based on an actual requirement, or another step may be added, or some steps may be reduced. For specific implementations of the steps, refer to related descriptions in the foregoing embodiments. Details are not described herein again.

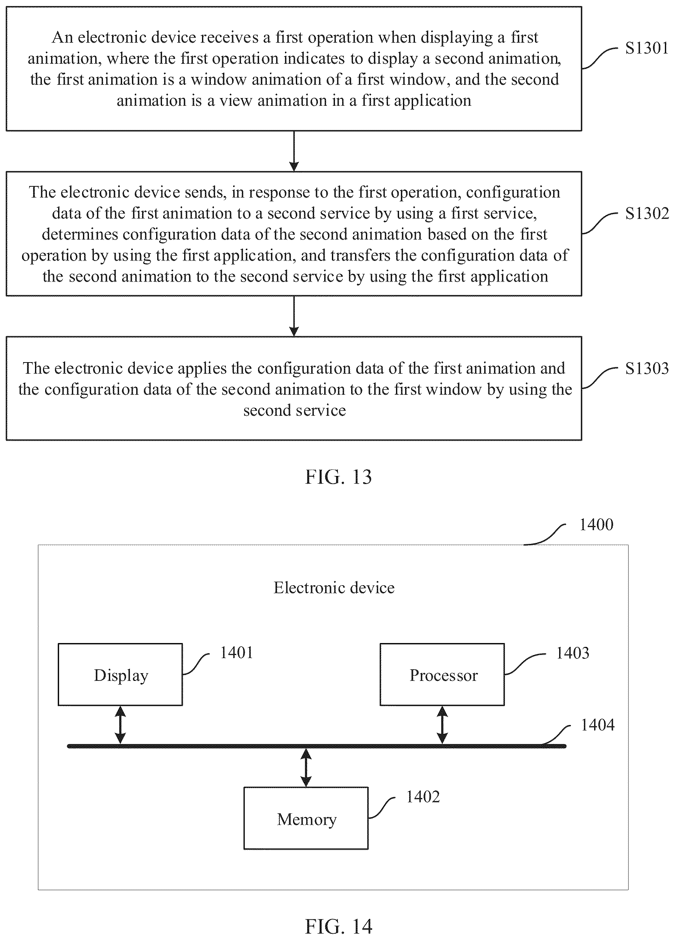

Based on the foregoing embodiments and a same technical concept, an embodiment of this application further provides a display method. As shown in FIG. 13, the method may include the following steps.

S1301: An electronic device receives a first operation when displaying a first animation, where the first operation indicates to display a second animation, the first animation is a window animation of a first window, and the second animation is a view animation in a first application.

In an example, the first animation may be the animation of exiting the application window in the foregoing embodiment, and the first window may be an application window. The second animation may be the animation of flipping the desktop page in the foregoing embodiment, and the first operation may be the second operation indicating to flip the desktop page in the foregoing embodiment.

In some embodiments of this application, step S1301 may also be replaced with the following step: An electronic device receives a first operation when displaying a second animation, where the first operation indicates to display a first animation, the first animation is a window animation of a first window, and the second animation is a view animation in a first application.

S1302: The electronic device sends, in response to the first operation, configuration data of the first animation to a second service by using a first service, determines configuration data of the second animation based on the first operation by using the first application, and transfers the configuration data of the second animation to the second service by using the first application.

In some embodiments of this application, the first service may be a window manager service WMS, and the second service may be a graphics framework service SF.

In some embodiments of this application, in an optional implementation, that the electronic device sends the configuration data of the first animation to the second service by using the first service may be specifically that the first service sends the configuration data of the first animation to the second service in an inter-process communication manner. In another optional implementation, that the electronic device sends the configuration data of the first animation to the second service by using the first service may be specifically: sending the configuration data of the first animation to a buffer queue by using the first service, and obtaining the configuration data of the first animation from the buffer queue by using the second service. The buffer queue may be used as a shared memory.

In some embodiments of this application, that the electronic device transfers the configuration data of the second animation to the second service by using the first application may be specifically: sending the configuration data of the second animation to a buffer queue by using the first application, and obtaining the configuration data of the second animation from the buffer queue by using the second service. The buffer queue may be used as a shared memory.

In some embodiments of this application, both the configuration data of the first animation and the configuration data of the second animation are identified as configuration data corresponding to the first window, or both the configuration data of the first animation and the configuration data of the second animation are identified as configuration data of a layer corresponding to the first window. The layer corresponding to the first window is a layer created by the first service.

In some embodiments of this application, configuration data of each animation indicates an attribute feature of a layer or window that carries the animation, and the attribute feature may include at least one of the following: a position, a size, a rotation angle, a radius, and a transparency.

In an example, the configuration data of the first animation may be the configuration data of the animation of exiting the application window in the foregoing embodiment, and the configuration data of the second animation may be the configuration data of the animation of flipping the desktop page in the foregoing embodiment.

S1303: The electronic device applies the configuration data of the first animation and the configuration data of the second animation to the first window by using the second service.

In some embodiments of this application, that the electronic device applies the configuration data of the first animation and the configuration data of the second animation to the first window by using the second service may be specifically: The electronic device applies, by using the second service, the configuration data of the first animation and the configuration data of the second animation to the layer corresponding to the first window, composes an animation interface based on an obtained layer, and sends the animation interface for display.

In some embodiments of this application, the electronic device may further efficiently execute a drag and follow animation based on the shared memory. For example, the electronic device executes a drag and follow animation of panning an application window based on a user operation. An execution process of the drag and follow animation may include: In response to a received second operation, the electronic device may control, by using a second application, to display a second window, where the second operation indicates to display the second window. After displaying the second window, the electronic device may determine, in response to a received third operation, configuration data of the drag and follow animation based on the third operation by using the second application, where the third operation indicates to execute the drag and follow animation for the second window, and the drag and follow animation is an animation of panning the window based on the third operation. After determining the configuration data of the drag and follow animation, the electronic device may send the configuration data of the drag and follow animation to the shared memory by using the second application, obtain the configuration data of the drag and follow animation from the shared memory by using the second service, and apply the configuration data of the drag and follow animation to the second window.

In an example, the first service may be a window manager service WMS, and the second service may be a graphics framework service SF.

In some embodiments of this application, the shared memory may be the buffer queue in the foregoing embodiments.

In an execution process of the drag and follow animation, the second window may also be replaced with an object such as an icon, a control, or content selected by the user.

For a specific implementation corresponding to the foregoing method, refer to descriptions of the related method in the foregoing embodiments. Details are not described herein again.

Based on the foregoing embodiments and a same technical concept, an embodiment of this application further provides an electronic device. The electronic device may be configured to implement the display method provided in embodiments of this application. As shown in FIG. 14, an electronic device 1400 may include a display 1401, a memory 1402, one or more processors 1403, and one or more computer programs (not shown in the figure). The foregoing components may be coupled through one or more communication buses 1404.

The display 1401 is configured to display a related user interface such as an application interface.

The memory 1402 stores the one or more computer programs (code), and the one or more computer programs include computer instructions. The one or more processors 1403 invoke the computer instructions stored in the memory 1402, so that the electronic device 1400 performs the display method provided in embodiments of this application.

During specific implementation, the memory 1402 may include a high-speed random access memory, and may also include a non-volatile memory, such as one or more magnetic disk storage devices, a flash memory device, or another non-volatile solid-state storage device. The memory 1402 may store an operating system (which is briefly referred to as a system below), for example, an embedded operating system such as Android, iOS, Windows, or Linux. The memory 1402 may be configured to store an implementation program of embodiments of this application. The memory 1402 may further store a network communication program. The network communication program may be used for communication with one or more additional devices, one or more user equipments, or one or more network devices.

The one or more processors 1403 may be a general-purpose central processing unit (Central Processing Unit, CPU), a microprocessor, an application-specific integrated circuit (Application-Specific Integrated Circuit, ASIC), or one or more integrated circuits configured to control program execution of the solutions of this application.

It should be noted that FIG. 14 is merely an implementation of the electronic device 1400 provided in this embodiment of this application. In actual application, the electronic device 1400 may alternatively include more or fewer components. This is not limited herein.

Based on the foregoing embodiments and a same technical concept, an embodiment of this application further provides a computer-readable storage medium. The computer-readable storage medium stores a computer program. When the computer program is run on a computer, the computer is enabled to perform the method provided in the foregoing embodiments.

Based on the foregoing embodiments and a same technical concept, an embodiment of this application further provides a computer program product. The computer program product includes a computer program or instructions. When the computer program or the instructions are run on a computer, the computer is enabled to perform the method provided in the foregoing embodiments.

All or some of the methods provided in embodiments of this application may be implemented by software, hardware, firmware, or any combination thereof. When software is used for implementation, all or some of the methods may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art may make various modifications and variations to this application without departing from the scope of this application. Thus, this application is intended to cover these modifications and variations, provided that they fall within the scope of the claims of this application and their equivalent technologies.

## Claims

1. A display method, applied to an electronic device, wherein the method comprises:
receiving a first operation when displaying a first animation, wherein the first operation indicates to display a second animation, the first animation is a window animation of a first window, and the second animation is a view animation in a first application;
in response to the first operation, sending configuration data of the first animation to a second service by using a first service, determining configuration data of the second animation based on the first operation by using the first application, and transferring the configuration data of the second animation to the second service by using the first application; and
applying the configuration data of the first animation and the configuration data of the second animation to the first window by using the second service.

2. The method according to claim 1, wherein applying the configuration data of the first animation and the configuration data of the second animation to the first window by using the second service comprises:
applying, by using the second service, the configuration data of the first animation and the configuration data of the second animation to a layer corresponding to the first window, composing an animation interface based on an obtained layer, and sending the animation interface for display.

3. The method according to claim 1 or 2, wherein transferring the configuration data of the second animation to the second service by using the first application comprises:
sending the configuration data of the second animation to a buffer queue by using the first application; and
obtaining the configuration data of the second animation from the buffer queue by using the second service.

4. The method according to any one of claims 1 to 3, wherein the first service is a window manager service WMS, and the second service is a graphics framework service SF.

5. The method according to any one of claims 1 to 4, wherein both the configuration data of the first animation and the configuration data of the second animation are identified as configuration data corresponding to the first window.

6. The method according to any one of claims 1 to 5, wherein configuration data of any animation indicates an attribute feature of a layer or window that carries the animation, and the attribute feature comprises at least one of the following: a position, a size, a rotation angle, a radius, and a transparency.

7. The method according to any one of claims 1 to 6, wherein the method further comprises:
in response to a received second operation, controlling, by using a second application, to display a second window, wherein the second operation indicates to display the second window;
in response to a received third operation, determining configuration data of a drag and follow animation based on the third operation by using the second application, wherein the third operation indicates to execute the drag and follow animation on the second window;
sending the configuration data of the drag and follow animation to a shared memory by using the second application;
obtaining the configuration data of the drag and follow animation from the shared memory by using the second service; and
applying the configuration data of the drag and follow animation to the second window by using the second service.

8. The method according to claim 7, wherein the shared memory is the buffer queue.

9. An electronic device, wherein the electronic device comprises a display, a memory, and one or more processors; and
the memory is configured to store computer program code, the computer program code comprises computer instructions, and when the computer instructions are executed by the one or more processors, the electronic device is enabled to perform the method according to any one of claims 1 to 8.

10. A computer-readable storage medium, wherein the computer-readable storage medium stores a computer program, and when the computer program is run on an electronic device, the electronic device is enabled to perform the method according to any one of claims 1 to 8.

11. A computer program product, wherein the computer program product comprises a computer program or instructions, and when the computer program or the instructions are run on an electronic device, the electronic device is enabled to perform the method according to any one of claims 1 to 8.
